(19) **Europäisches Patentamt**

**European Patent Office**

**Office européen des brevets**

(11) **EP 0 828 599 B1**

(12) **EUROPÄISCHE PATENTSCHRIFT**

(45) Veröffentlichungstag und Bekanntmachung des Hinweises auf die Patenterteilung:
**17.10.2001 Patentblatt 2001/42**

(51) Int Cl.7: **B29C 51/42**, C08L 67/00, C08K 13/00

(21) Anmeldenummer: **96919792.0**

(22) Anmeldetag: **21.05.1996**

(86) Internationale Anmeldenummer:
**PCT/EP96/02175**

(87) Internationale Veröffentlichungsnummer:
**WO 96/38287 (05.12.1996 Gazette 1996/53)**

(54) **AMORPHE EINGEFÄRBTE PLATTE AUS EINEM KRISTALLISIERBAREN THERMOPLAST**

AMORPHOUS DYED PLATE OF A CRYSTALLISABLE THERMOPLASTIC

PLAQUE COLOREE AMORPHE EN MATIERE THERMOPLASTIQUE CRISTALLISABLE

(84) Benannte Vertragsstaaten:
**AT BE DE DK ES FR GB IE IT LU NL SE**

(30) Priorität: **29.05.1995 DE 19519577**
**19.06.1995 DE 19522119**
**02.08.1995 DE 19528333**

(43) Veröffentlichungstag der Anmeldung:
**18.03.1998 Patentblatt 1998/12**

(73) Patentinhaber: **Hostaglas Ltd.**
**Dublin 24 (IE)**

(72) Erfinder:
• **MURSCHALL, Ursula**
**D-55283 Nierstein (DE)**
• **GAWRISCH, Wolfgang**
**D-55296 Gau-Bischofsheim (DE)**
• **BRUNOW, Rainer**
**D-65817 Eppstein (DE)**

(74) Vertreter: **Grünecker, Kinkeldey,**
**Stockmair & Schwanhäusser Anwaltssozietät**
**Maximilianstrasse 58**
**80538 München (DE)**

(56) Entgegenhaltungen:
**EP-A- 0 041 274          EP-A- 0 233 402**
**EP-A- 0 471 528          DE-A- 1 479 801**
**DE-A- 1 694 232**

• **BP & R. BRITISH PLASTICS AND RUBBER,**
**1.Januar 1992, Seite 26 XP000575738 "IRISH**
**COMPANY CRACKS THE 5 MM PET SHEET**
**BARRIER"**

## Beschreibung

Die Erfindung betrifft eine amorphe, eingefärbte Platte aus einem kristallisierbaren Thermoplast, deren Dicke im Bereich von 1 bis 20 mm liegt. Die Platte enthält mindestens ein organisches und/oder ein anorganisches Pigment als Farbmittel. Sie zeichnet sich durch homogene optische und sehr gute mechanische Eigenschaften aus. Die Erfindung betrifft ferner ein Verfahren zur Herstellung dieser Platte und ihre Verwendung.

Amorphe, eingefärbte Platten mit einer Dicke zwischen 1 und 20 mm sind hinreichend bekannt. Diese flächigen Gebilde bestehen aus amorphen, nicht kristallisierbaren Thermoplasten. Typische Beispiele für derartige Thermoplaste, die zu Platten verarbeitet werden, sind z.B. Polyvinylchlorid (PVC), Polycarbonat (PC) und Polymethylmethacrylat (PMMA). Diese Halbzeuge werden auf sogenannten Extrusionsstraßen hergestellt (vgl. Polymer Werkstoffe, Band II, Technologie 1, Georg Thieme Verlag, Stuttgart, 1984). Das Aufschmelzen des pulver- oder granulatförmigen Rohstoffes erfolgt in einem Extruder. Die amorphen Thermoplaste sind nach der Extrusion infolge der mit abnehmender Temperatur stetig steigenden Viskosität leicht über Glättwerke oder andere Ausformwerkzeuge umzuformen. Amorphe Thermoplaste besitzen dann nach der Ausformung eine hinreichende Stabilität, d.h. eine hohe Viskosität, um im Kalibrierwerkzeug "von selbst zu stehen". Sie sind aber noch weich genug um sich vom Werkzeug formen zu lassen. Die Schmelzviskosität und Eigensteife von amorphen Thermoplasten ist im Kalibrierwerkzeug so hoch, daß das Halbzeug nicht vor dem Abkühlen im Kalibrierwerkzeug zusammenfällt. Bei leicht zersetzbaren Werkstoffen wie PVC sind beim Extrusionsschritt besondere Verarbeitungshilfen, wie z.B. Verarbeitungsstabilisatoren gegen Zersetzung und Gleitmittel gegen zu hohe innere Reibung und damit unkontrollierbare Erwärmung notwendig. Äußere Gleitmittel sind erforderlich um das Hängenbleiben an Wänden und Walzen zu verhindern.

Bei der Verarbeitung von PMMA wird z.B. zwecks Feuchtigkeitsentzug ein Entgasungsextruder eingesetzt.

Bei der Herstellung von Platten aus amorphen Thermoplasten sind z.T. kostenintensive Additive erforderlich, die teilweise migrieren und zu Produktionsproblemen infolge von Ausdampfungen und zu Oberflächenbelägen auf dem Halbzeug führen können. PVC-Platten sind schwer oder nur mit speziellen Neutralisations- bzw. Elektrolyseverfahren recyklierbar. PC- und PMMA-Platten sind ebenfalls schlecht und nur unter Verlust oder extremer Verschlechterung der mechanischen Eigenschaften recyklierbar.

Neben diesen Nachteilen besitzen PMMA-Platten auch eine extrem schlechte Schlagzähigkeit und zersplittern bei Bruch oder mechanischer Belastung. Daneben sind PMMA-Platten leicht brennbar, so daß diese Platten beispielsweise für Innenanwendungen und im Messebau nicht eingesetzt werden dürfen.

PMMA- und PC-Platten sind außerdem nicht kaltformbar. Beim Kaltformen zerbrechen PMMA-Platten in gefährliche Splitter. Beim Kaltformen von PC-Platten treten Haarrisse und Weißbruch auf.

In der EP-A-0 471 528 wird ein Verfahren zum Formen eines Gegenstandes aus einer Polyethylenterephthalat (PET)-Platte beschrieben. Die intrinsische Viskosität des eingesetzten PET liegt im Bereich von 0,5 bis 1,2. Die PET-Platte wird in einer Tiefziehform beidseitig in einem Temperaturbereich zwischen der Glasübergangstemperatur und der Schmelztemperatur wärmebehandelt. Die geformte PET-Platte wird aus der Form herausgenommen, wenn das Ausmaß der Kristallisation der geformten PET-Platte im Bereich von 25 % und 50 % liegt. Die in der EP-A-0 471 528 offenbarten PET-Platten haben eine Dicke von 1 bis 10 mm. Da der aus der PET-Platte hergestellte, tiefgezogene Formkörper teilkristallin und damit nicht mehr transparent ist und die Oberflächeneigenschaften des Formkörpers durch das Tiefziehverfahren, die dabei gegebenen Temperaturen und Formen bestimmt werden, ist es unwesentlich welche optischen Eigenschaften (z.B. Glanz, Trübung und Lichttransmission) die eingesetzten PET-Platten besitzen. In der Regel sind die optischen Eigenschaften dieser Platten schlecht und optimierungsbedürftig. Die Platten enthalten weder einen Farbstoff noch ein organisches oder anorganisches Pigment.

In der US-A-3,496,143 wird das Vakuum-Tiefziehen einer 3 mm dicken PET-Platte, deren Kristallisation im Bereich von 5 % bis 25 % liegen soll, beschrieben. Die Kristallinität des tiefgezogenen Formkörpers ist größer als 25 %. Auch an diese PET-Platten werden keine Anforderungen hinsichtlich der optischen Eigenschaften gestellt. Da die Kristallinität der eingesetzten Platten bereits zwischen 5 % und 25 % liegt, sind diese Platten trüb und undurchsichtig. Die Platten enthalten keinen Farbstoff und keinerlei organische oder anorganische Pigmente als Farbmittel.

Da die genannten Platten kein Lichtschutzmittel enthalten, sind sie für die Anwendung im Außenbereich nur bedingt geeignet.

BP&R. British Plastics and Rubber, Januar 1992, Seite 21 offenbart eine eingefärbte Platte mit einer Dicke von 1 bis 5 mm.

Zudem konnten bisher amorphe Platten aus kristallisierbaren Thermoplasten als Hauptbestandteil mit einer Dicke von 1 mm oder mehr gar nicht oder nur mit unbefriedigenden optischen und mechanischen Eigenschaften erhalten werden.

Aufgabe der vorliegenden Erfindung war es, eine amorphe, eingefärbte Platte mit einer Dicke von 1 bis 20 mm bereitzustellen, die sowohl gute mechanische als auch optische Eigenschaften aufweist.

Zu den guten optischen Eigenschaften zählt beispielsweise ein niedrige Lichttransmission sowie ein hoher Oberflächenglanz.

Zu den guten mechanischen Eigenschaften zählt unter anderem eine hohe Schlagzähigkeit sowie eine hohe Bruchfestigkeit.

Darüber hinaus sollte die erfindungsgemäße Platte recyclierbar sein, insbesondere ohne Verlust der mechanischen Eigenschaften, sowie schwer brennbar, damit sie beispielsweise auch für Innenanwendungen und im Messebau eingesetzt werden kann.

Gelöst wird die Aufgabe durch eine amorphe, eingefärbte Platte mit einer Dicke im Bereich von 1 bis 20 mm, die als Hauptbestandteil einen kristallisierbaren Thermoplasten und mindestens ein organisches und/oder anorganisches Pigment als Farbmittel enthält, wobei die Konzentration des Pigments im Bereich von 0,5 bis 30 Gew.-%, bezogen auf das Gewicht des kristallisierbaren Thermoplasten, liegt.

Zudem betrifft die vorliegende Erfindung ein Verfahren zur Herstellung dieser Platte mit den Merkmalen des Anspruchs 22. Bevorzugte Ausführungsformen dieses Verfahrens sind in den Unteransprüchen 23 bis 28 erläutert.

Bei den Farbmitteln unterscheidet man nach DIN 55944 zwischen Farbstoffen und Pigmenten. Pigmente sind unter den jeweiligen Verarbeitungsbedingungen im Polymeren nahezu unlöslich, während Farbstoffe löslich sind (DIN 55949). Die färbende Wirkung der Pigmente wird durch die Teilchen selbst verursacht. Der Begriff Pigment ist im allgemeinen an eine Teilchengröße von 0,01 µm bis 1,0 µm gebunden. Nach DIN 53206 unterscheidet man bei der Definition der Pigmentteilchen zwischen Primärteilchen, Aggregaten und Agglomeraten.

Primärteilchen, wie sie in der Regel bei der Herstellung anfallen, besitzen aufgrund ihrer außerordentlich geringen Teilchengröße eine ausgeprägte Tendenz, sich zusammenzulagern. Dadurch entstehen aus den Primärteilchen durch flächiges Zusammenlagern die Aggregate, die deshalb eine kleinere Oberfläche aufweisen als der Summe der Oberfläche ihrer Primärteilchen entspricht. Durch Aneinanderlagerung von Primärteilchen und/oder Aggregaten über Ecken und Kanten bilden sich Agglomerate, deren Gesamtoberflächen von der Summe der Einzelflächen nur wenig abweicht. Wenn man - ohne nähere Angaben - von Pigmentteilchengröße spricht, bezieht man sich auf die Aggregate, wie sie im wesentlichen nach der Einfärbung vorliegen.

In pulverförmigen Pigmenten sind die Aggregate stets zu Agglomeraten zusammengelagert, die bei der Einfärbung zerteilt, vom Kunststoff benetzt und homogen verteilt werden müssen. Diese gleichzeitig ablaufenden Vorgänge werden als Dispergierung bezeichnet. Bei der Einfärbung mit Farbstoffen handelt es sich demgegenüber um einen Lösungsprozeß, als dessen Ergebnis der Farbstoff molekular gelöst vorliegt.

Im Gegensatz zu den anorganischen Pigmenten ist bei einzelnen organischen Pigmenten eine völlige Unlöslichkeit nicht gegeben, insbesondere nicht bei einfach aufgebauten Pigmenten mit niedrigen Molekulargewichten.

Farbstoffe sind durch ihre chemische Struktur ausreichend beschrieben. Pigmente jeweils gleicher chemischer Zusammensetzung können jedoch in verschiedenen Kristallmodifikationen hergestellt werden und vorliegen. Ein typisches Beispiel dafür ist das Weißpigment Titandioxid, das in der Rutilform und in der Anatasform vorliegen kann.

Bei Pigmenten kann durch Coatung, d.h. durch Nachbehandlung der Pigmentteilchenoberfläche, mit organischen oder anorganischen Mitteln eine Verbesserung der Gebrauchseigenschaften erzielt werden. Diese Verbesserung liegt insbesondere in der Erleichterung der Dispergierung und in der Anhebung der Licht-, Wetter- und Chemikalienbeständigkeit. Typische Coatungsmittel für Pigmente sind beispielsweise Fettsäuren, Fettsäureamide, Siloxane und Aluminiumoxide.

Geeignete anorganische Pigmente sind beispielsweise die Weißpigmente Titandioxid, Zinksulfid und Zinnsulfid, die organisch und/oder anorganisch gecoated sein können.

Die Titandioxidteilchen können aus Anatas oder Rutil bestehen, vorzugsweise überwiegend aus Rutil, welcher im Vergleich zu Anatas eine höhere Deckkraft zeigt. In bevorzugter Ausführungsform bestehen die Titandioxidteilchen zu mindestens 95 Gew.-% aus Rutil. Sie können nach einem üblichen Verfahren, z.B. nach dem Chlorid- oder dem Sulfat-Prozeß, hergestellt werden. Die mittlere Teilchengröße ist relativ klein und liegt vorzugsweise im Bereich von 0,10 bis 0,30 µm.

Durch Titandioxid der beschriebenen Art entstehen innerhalb der Polymermatrix keine Vakuolen während der Plattenherstellung.

Die Titandioxidteilchen können einen Überzug aus anorganischen Oxiden besitzen, wie er üblicherweise als Überzug für $TiO_2$-Weißpigment in Papieren oder Anstrichmitteln zur Verbesserung der Lichtechtheit eingesetzt wird. $TiO_2$ ist bekanntlich photoaktiv. Bei Einwirkung von UV-Strahlen bilden sich freie Radikale auf der Oberfläche der Partikel. Diese freien Radikale können zu den filmbildenden Bestandteilen der Anstrichmittel wandern, was zu Abbaureaktionen und Vergilbung führt. Zu den besonders geeigneten Oxiden gehören die Oxide von Aluminium, Silicium, Zink oder Magnesium oder Mischungen aus zwei oder mehreren dieser Verbindungen. $TiO_2$-Partikel mit einem Überzug aus mehreren dieser Verbindungen werden z.B. in der EP-A-O 044 515 und der EP-A-O 078 633 beschrieben. Weiterhin kann der Überzug organische Verbindungen mit polaren und unpolaren Gruppen enthalten. Die organischen Verbindungen müssen bei der Herstellung der Platte durch Extrusion der Polymerschmelze ausreichend thermostabil sein. Polare Gruppen sind beispielsweise -OH, -OR, -COOX, (X = R, H oder Na, R = Alkyl mit 1 bis 34 C-Atomen). Bevorzugte organische Verbindungen sind Alkanole und Fettsäuren mit 8 bis 30 C-Atomen in der Alkylgruppe, insbesondere Fettsäuren und primäre n-Alkanole mit 12 bis 24 C-Atomen, sowie Polydiorganosiloxane und/oder Polyorganohydrogensiloxane wie z.B. Polydimethylsiloxan und Polymethylhydrogensiloxan.

Der Überzug auf den Titandioxidteilchen besteht gewöhnlich aus 1 bis 12, insbesondere 2 bis 6 g anorganischer Oxide und 0,5 bis 3, insbesondere 0,7 bis 1,5 g organischer Verbindung, bezogen auf 100 g Titandioxidteilchen. Der Überzug wird auf die Teilchen in wäßriger Suspension aufgebracht. Die anorganischen Oxide werden aus wasserlöslichen Verbindungen, z.B. Alkali-, insbesondere Natriumaluminat, Aluminiumhydroxid, Aluminiumsulfat, Aluminiumnitrat, Natriumsilikat (Wasserglas) oder Kieselsäure in der wäßrigen Suspension ausgefällt.

Unter anorganischen Oxiden wie $Al_2O_3$ und $SiO_2$ sind auch die Hydroxide oder deren verschiedenen Entwässerungsstufen wie z.B. Oxidhydrate zu verstehen, ohne daß man deren genaue Zusammensetzung und Struktur kennt. Auf das $TiO_2$-Pigment werden nach dem Glühen und Mahlen in wäßriger Suspension die Oxidhydrate z.B. des Aluminiums und/oder Siliciums gefällt, die Pigmente dann gewaschen und getrocknet. Diese Ausfällung kann somit direkt in einer Suspension geschehen, wie sie im Herstellungsprozeß nach der Glühung und der sich anschließenden Naßmahlung anfällt. Die Ausfällung der Oxide und/oder Oxidhydrate der jeweiligen Metalle erfolgt aus den wasserlöslichen Metallsalzen im bekannten pH-Bereich, für das Aluminium wird beispielsweise Aluminiumsulfat in wäßriger Lösung (pH kleiner 4) eingesetzt und durch Zugabe von wäßriger Ammoniaklösung oder Natronlauge im pH-Bereich zwischen 5 und 9, vorzugsweise zwischen 7 und 8,5, das Oxidhydrat gefällt. Geht man von einer Wasserglas- oder Alkalialuminatlösung aus, sollte der pH-Wert der vorgelegten $TiO_2$-Suspension im stark alkalischen Bereich (pH größer 8) liegen. Die Ausfällung erfolgt dann durch Zugabe von Mineralsäure wie Schwefelsäure im pH-Bereich von 5 bis 8. Nach der Ausfällung der Metalloxide wird die Suspension noch 15 Minuten bis etwa 2 Stunden gerührt, wobei die ausgefällten Schichten eine Alterung erfahren. Das beschichtete Produkt wird von der wäßrigen Dispersion abgetrennt und nach dem Waschen bei erhöhter Temperatur, insbesondere bei 70 bis 110°C, getrocknet.

Typische anorganische Schwarzpigmente sind Rußmodifikationen, die ebenfalls gecoated sein können, Kohlenstoffpigmente die sich von den Rußpigmenten durch einen höheren Aschegehalt unterscheiden und oxidische Schwarzpigmente wie Eisenoxidschwarz und Kupfer-, Chrom-, Eisenoxid-Mischungen (Mischphasenpigmente).

Geeignete anorganische Buntpigmente sind oxidische Buntpigmente, hydroxylhaltige Pigmente, sulfidische Pigmente und Chromate.

Beispiele für oxidische Buntpigmente sind Eisenoxidrot, Titandioxid-Nickeloxid-Antimonoxid-Mischphasenpigmente, Titandioxid-Chromoxid, Antimonoxid-Mischphasenpigmente, Mischungen der Oxide vom Eisen, Zink und Titan, Chromoxid Eisenoxidbraun, Spinelle des Systems Kobalt-Aluminium-Titan-Nickel-Zinkoxid und Mischphasenpigmente auf Basis von anderen Metalloxiden.

Typische hydroxylhaltige Pigmente sind beispielsweise Oxid-Hydroxide des dreiwertigen Eisens wie FeOOH.

Beispiele für sulfidische Pigmente sind Cadmium-Sulfid-Selenide, Cadmium-Zinksulfide, Natrium-Aluminium-Silikat mit polysulfidartig gebundenem Schwefel im Gitter.

Beispiele für Chromate sind die Bleichromate, die in den Kristallformen monoklin, rhombisch und tetragonal vorliegen können.

Alle Buntpigmente können wie die Weiß- und Schwarzpigmente sowohl ungecoated als auch anorganisch und/oder organisch gecoated vorliegen.

Die organischen Buntpigmente teilt man in der Regel in Azopigmente und sogenannte Nicht-Azopigmente auf.

Charakteristisch für die Azopigmente ist die Azo (-N = N-)-Gruppe. Azopigmente können Monoazopigmente, Diazopigmente, Diazokondensationspigmente, Salze von Azofärbsäuren und Mischungen aus den Azopigmenten sein.

Die amorphe eingefärbte Platte enthält mindestens ein anorganisches und/oder organisches Pigment. In speziellen Ausführungsformen kann die amorphe Platte auch Mischungen aus anorganischen und/oder organischen Pigmenten sowie zusätzlich lösliche Farbstoffe enthalten. Die Konzentration des löslichen Farbstoffes liegt dabei vorzugsweise im Bereich von 0,001 bis 20 Gew.-%, vorzugsweise 0,01 bis 20 Gew.-%, besonders bevorzugt im Bereich von 0,5 bis 10 Gew.-% bezogen auf das Gewicht des kristallisierbaren Thermoplasten.

Von den löslichen Farbstoffen werden besonders die fett- und aromatenlöslichen Farbstoffe bevorzugt. Dabei handelt es sich um Azo- oder Anthrachinonfarbstoffe.

Geeignete lösliche Farbstoffe sind beispielsweise: Solventgelb 93 ein Pyrazolonderivat, Solventgelb 16 ein fettlöslicher Azo-Farbstoff, Fluorolgrüngold ein fluoreszierender polycyclischer Farbstoff, Solventrot 1 ein Azofarbstoff, Azofarbstoffe wie Thermoplastrot BS, Sudanrot BB, Solventrot 138 ein Anthrachinonderivat, fluoreszierende Benzopyranfarbstoffe wie Fluorolrot GK und Fluorolorange GK, Solventblau 35 ein Anthrachinonfarbstoff, Solventblau ein Phthalocyaninfarbstoff und viele andere.

Geeignet sind auch Mischungen von zwei oder mehreren dieser löslichen Farbstoffe.

Die amorphe, eingefärbte Platte enthält als Hauptbestandteil einen kristallisierbaren Thermoplasten. Geeignete kristallisierbare bzw. teilkristalline Thermoplaste sind beispielsweise Polyethylenterephthalat, Polybutylenterephthalat, Cycloolefin- und Cycloolefincopolymere, wobei Polyethylenterephthalat bevorzugt ist.

Erfindungsgemäß versteht man unter kristallisierbarem Thermoplast

- kristallisierbare Homopolymere,
- kristallisierbare Copolymere,
- kristallisierbare Compounds,
- kristallisierbare Recyklat und
- andere Variationen von kristallisierbarem Thermoplasten.

Unter amorpher Platte werden im Sinne der vorliegenden Erfindung solche Platten verstanden, die, obwohl der eingesetzte kristallisierbare Thermoplast eine Kristallinität zwischen 5 % und 65 %, vorzugsweise zwischen 25 % und 65 %, besitzt, nicht kristallin sind. Nicht kristallin, d.h. im wesentlichen amorph bedeutet, daß der Kristallinitätsgrad im allgemeinen unter 5 %, vorzugsweise unter 2 % liegt und besonders bevorzugt 0 % beträgt. Die erfindungsgemäße amorphe Platte ist im wesentlichen unorientiert.

Die Standardviskosität des erfindungsgemäßen Thermoplasten SV (DCE), gemessen in Dichloressigsäure nach DIN 53728, liegt zwischen 800 und 6000, vorzugsweise zwischen 950 und 5000 und besonders bevorzugt zwischen 1000 und 4000.

Die intrinsische Viskosität IV (DCE) berechnet sich wie folgt aus der Standardviskosität:

$$IV\ (DCE) = 6{,}67 \cdot 10^{-4}\ SV\ (DCE) + 0{,}118$$

In einer besonders bevorzugten Ausführungsform enthält die erfindungsgemäße, eingefärbte, amorphe Platte als Hauptbestandteil kristallisierbares Polyethylenterephthalat.

Verfahren zur Herstellung der kristallisierbaren Thermoplaste sind dem Fachmann bekannt.

Die Herstellung von Polyethylenterephthalaten geschieht dabei üblicherweise durch Polykondensation in der Schmelze oder durch eine zweistufige Polykondensation, wobei der erste Schritt bis zu einem mittleren Molekulargewicht - entsprechend einer mittleren intrinsischen Viskosität IV von etwa 0,5 bis 0,7 - in der Schmelze, und die Weiterkondensation durch Feststoffkondensation ausgeführt wird. Die Polykondensation wird im allgemeinen in Gegenwart von bekannten Polykondensationskatalysatoren oder -Katalysatorsystemen durchgeführt. Bei der Feststoffkondensation werden PET-Chips unter vermindertem Druck oder unter Schutzgas solange auf Temperaturen im Bereich von 180 bis 320°C erwärmt, bis das gewünschte Molekulargewicht erreicht ist.

Die Herstellung von Polyethylenterephthalat wird in einer Vielzahl von Patenten ausführlich beschrieben, wie z.B. in der JP-A-60-139 717, DE-C-2 429 087, DE-A-27 07 491, DE-A-23 19 089, DE-A-16 94 461, JP-63-41 528, JP-62-39 621, DE-A-41 17 825, DE-A-42 26 737, JP-60-141 715, DE-A-27 21 501 und US-A-5,296,586.

Polyethylenterephthalate mit besonders hohen Molekulargewichten lassen sich durch Polykondensation von Dicarbonsäure-Diol-Vorkondensaten (Oligomeren) bei erhöhter Temperatur in einem flüssigen Wärmeträger in Gegenwart üblicher Polykondensationskatalysatoren und ggf. cokondensierbarer Modifizierungsmittel herstellen, wenn der flüssige Wärmeträger inert und frei ist von aromatischen Baugruppen und einen Siedepunkt im Bereich von 200 bis 320°C hat, das Gewichtsverhältnis von eingesetztem Dicarbonsäure-Diol-Vorkondensat (Oligomeren) zu flüssigem Wärmeträger im Bereich von 20:80 bis 80:20 liegt, und die Polykondensation im siedenden Reaktionsgemisch in Gegenwart eines Dispersionsstabilisators durchgeführt wird.

Der Oberflächenglanz der erfindungsgemäßen Platte, gemessen nach DIN 67530 (Meßwinkel 20°) ist vorzugsweise größer als 90, besonders bevorzugt größer als 100 und die Lichttransmission, gemessen nach ASTM D 1003, ist vorzugsweise kleiner 5 %, besonders bevorzugt kleiner 3 %.

Darüber hinaus weist die erfindungsgemäße Platte eine gedeckte, homogene Optik auf.

Im Fall von Polyethylenterephthalat tritt bei der Messung der Schlagzähigkeit $a_n$ nach Charpy (gemessen nach ISO 179/1D) an der Platte vorzugsweise kein Bruch auf. Darüber hinaus liegt die Kerbschlagzähigkeit $a_k$ nach Izod (gemessen nach ISO 180/1A) der Platte vorzugsweise im Bereich von 2,0 bis 8,0 kJ/m$^2$, besonders bevorzugt im Bereich von 4,0 bis 6,0 kJ/m$^2$.

Polyethylenterephthalat-Polymere mit einem Kristallitschmelzpunkt $T_m$, gemessen mit DSC (Differential Scanning Calorimetry) mit einer Aufheizgeschwindigkeit von 10°C/min, von 220°C bis 280°C, vorzugsweise von 230°C bis 270°C, mit einem Kristallisationstemperaturbereich $T_c$ zwischen 75°C und 280°C, vorzugsweise 75°C und 260°C, einer Glasübergangstemperatur $T_g$ zwischen 65°C und 90°C und mit einer Dichte, gemessen nach DIN 53479, von 1,30 bis 1,45 g/cm$^3$ und einer Kristallinität zwischen 5 % und 65 %, vorzugsweise 25 % bis 65 %, stellen als Ausgangsmaterialien zur Herstellung der Platte bevorzugte Polymere dar.

Das Schüttgewicht, gemessen nach DIN 53466, liegt vorzugsweise zwischen 0,75 kg/dm$^3$ und 1,0 kg/dm$^3$ und besonders bevorzugt zwischen 0,80 kg/dm$^3$ und 0,90 kg/dm$^3$.

Die Polydispersität $M_w/M_n$ des Polyethylenterephthalats gemessen mittels GPC liegt vorzugsweise zwischen 1,5 und 6,0, vorzugsweise zwischen 2,5 und 6,0, und besonders bevorzugt zwischen 3,0 und 5,0.

In einer besonders bevorzugten Ausführungsform ist die erfindungsgemäße Platte mit einem UV-Stabilisator als Lichtschutzmittel ausgerüstet.

Die Konzentration des Lichtschutzmittels liegt vorzugsweise im Bereich von 0,01 bis 5 Gew.-%, bezogen auf das Gewicht des kristallisierbaren Thermoplasten.

Licht, insbesondere der ultraviolette Anteil der Sonnenstrahlung, d.h. der Wellenlängenbereich von 280 bis 400 nm, leitet bei Thermoplasten Abbauvorgänge ein, als deren Folge sich nicht nur das visuelle Erscheinungsbild infolge von Farbänderung bzw. Vergilbung ändert, sondern auch die mechanisch-physikalischen Eigenschaften negativ beeinflußt werden.

Die Inhibierung dieser photooxidativen Abbauvorgänge ist von erheblicher technischer und wirtschaftlicher Bedeutung, da andernfalls die Anwendungsmöglichkeiten von zahlreichen Thermoplasten drastisch eingeschränkt sind.

Polyethylenterephthalate beginnen beispielsweise schon unterhalb von 360 nm UV-Licht zu absorbieren, ihre Absorption nimmt unterhalb von 320 nm beträchtlich zu und ist unterhalb von 300 nm sehr ausgeprägt. Die maximale Absorption liegt zwischen 280 und 300 nm.

In Gegenwart von Sauerstoff werden hauptsächlich Kettenspaltungen, jedoch keine Vernetzungen beobachtet. Kohlenmonoxid, Kohlendioxid und Carbonsäuren stellen die mengenmäßig überwiegenden Photooxidationsprodukte dar. Neben der direkten Photolyse der Estergruppen müssen noch Oxidationsreaktionen in Erwägung gezogen werden, die über Peroxidradikale ebenfalls die Bildung von Kohlendioxid zur Folge haben.

Die Photooxidation von Polyethylenterephthalaten kann auch über Wasserstoffspaltung in $\alpha$-Stellung der Estergruppen zu Hydroperoxiden und deren Zersetzungsprodukten sowie zu damit verbundenen Kettenspaltungen führen (H. Day, D.M. Wiles: J. Appl. Polym. Sci 16, 1972, Seite 203).

UV-Stabilisatoren bzw. UV-Absorber als Lichtschutzmittel sind chemische Verbindungen, die in die physikalischen und chemischen Prozesse des lichtinduzierten Abbaus eingreifen können. Ruß und andere Pigmente können teilweise einen Lichtschutz bewirken. Diese Substanzen sind jedoch für Platten ungeeignet, da sie zu einer Farbänderung führen. Für amorphe Platten sind nur organische und metallorganische Verbindungen geeignet, die dem zu stabilisierenden Thermoplasten keine oder nur eine extrem geringe Farbänderung verleihen.

Geeignete Lichtschutzmittel oder UV-Stabilisatoren sind beispielsweise 2-Hydroxybenzophenone, 2-Hydroxybenzotriazole, nickelorganische Verbindungen, Salicylsäureester, Zimtsäureester-Derivate, Resorcinmonobenzoate, Oxalsäureanilide, Hydroxybenzoesäureester, sterisch gehinderte Amine und Triazine, wobei die 2-Hydroxybenzotriazole und die Triazine bevorzugt sind.

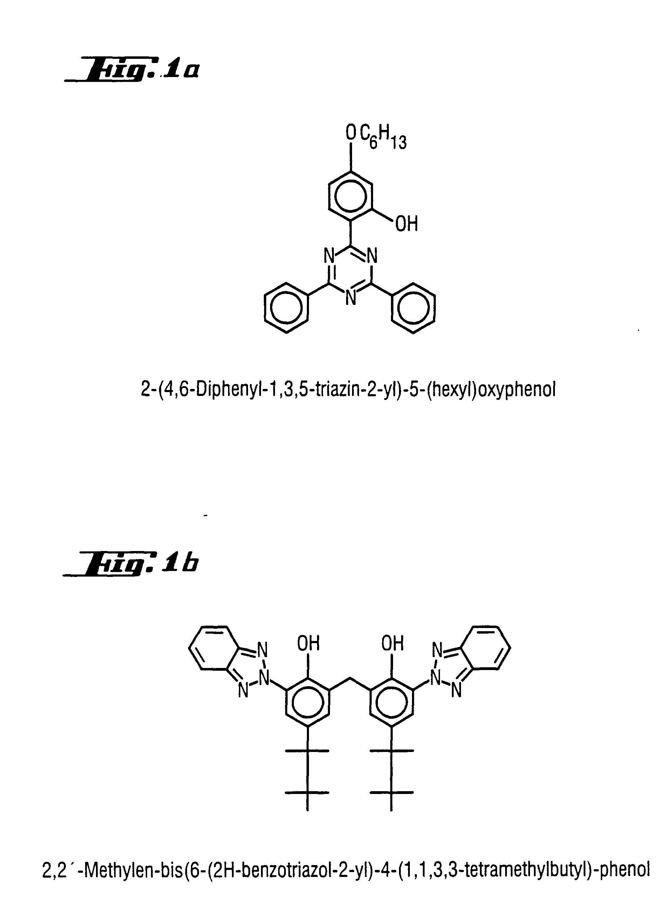

In einer besonders bevorzugten Ausführungsform enthält die erfindungsgemäße, eingefärbte, amorphe Platte als Hauptbestandteil ein kristallisierbares Polyethylenterephthalat und 0,01 Gew.-% bis 5,0 Gew.-% 2-(4,6-Diphenyl-1,3,5-triazin-2-yl)-5-(hexyl)oxy-phenol (Struktur in Fig. 1a) oder 0,01 Gew.-% bis 5,0 Gew.-% 2,2'-Methylen-bis(6-(2H-benzotriazol-2-yl)-4-(1,1,3,3-tetramethylbutyl)-phenol (Struktur in Fig. 1b). In einer bevorzugten Ausführungsform können auch Mischungen dieser beiden UV-Stabilisatoren oder Mischungen von mindestens einem dieser beiden UV-Stabilisatoren mit anderen UV-Stabilisatoren eingesetzt werden, wobei die Gesamtkonzentration an Lichtschutzmittel vorzugsweise zwischen 0,01 Gew.-% und 5,0 Gew.-%, bezogen auf das Gewicht an kristallisierbarem Polyethylenterephthalat, liegt.

Bewitterungstests haben ergeben, daß die UV-stabilisierten Platten nach 5 bis 7 Jahren Außenanwendung keine Vergilbung, keine Versprödung, keinen Glanzverlust an der Oberfläche, keine Rißbildung an der Oberfläche und keine Verschlechterung der mechanischen Eigenschaften aufweisen sollten.

Daneben wurde völlig unerwartet eine gute Kaltformbarkeit ohne Bruch, ohne Haarrisse und/oder ohne Weißbruch festgestellt, so daß die erfindungsgemäße Platte ohne Temperatureinwirkung verformt und gebogen werden kann.

Darüber hinaus ergaben Messungen, daß die erfindungsgemäße Platte schwer brennbar und schwer entflammbar ist, so daß sie sich beispielsweise für Innenanwendungen und im Messebau eignet.

Desweiteren ist die erfindungsgemäße Platte ohne Umweltbelastung und ohne Verlust der mechanischen Eigenschaften problemlos recyklierbar, wodurch sie sich insbesondere für die Verwendung als kurzlebige Werbeschilder oder anderer Werbeartikel eignet.

In der UV-stabilisierten Ausführungsform besitzt die Platte eine verbesserte Bewitterungsbeständigkeit und eine erhöhte UV-Stabilität. Das bedeutet, daß die Platten durch Bewitterung und Sonnenlicht oder durch andere UV-Strahlung nicht oder nur extrem wenig geschädigt werden, so daß sich die Platten für Außenanwendungen und/oder kritische Innenanwendungen eignen. Insbesondere sollen die Platten bei mehrjähriger Außenanwendung nicht vergilben, keine Versprödung oder Rißbildung der Oberfläche zeigen und auch keine Verschlechterung der mechanischen Eigenschaften aufweisen.

Die Herstellung der erfindungsgemäßen, eingefärbten, amorphen Platte kann beispielsweise nach einem Extrusionsverfahren in einer Extrusionsstraße erfolgen.

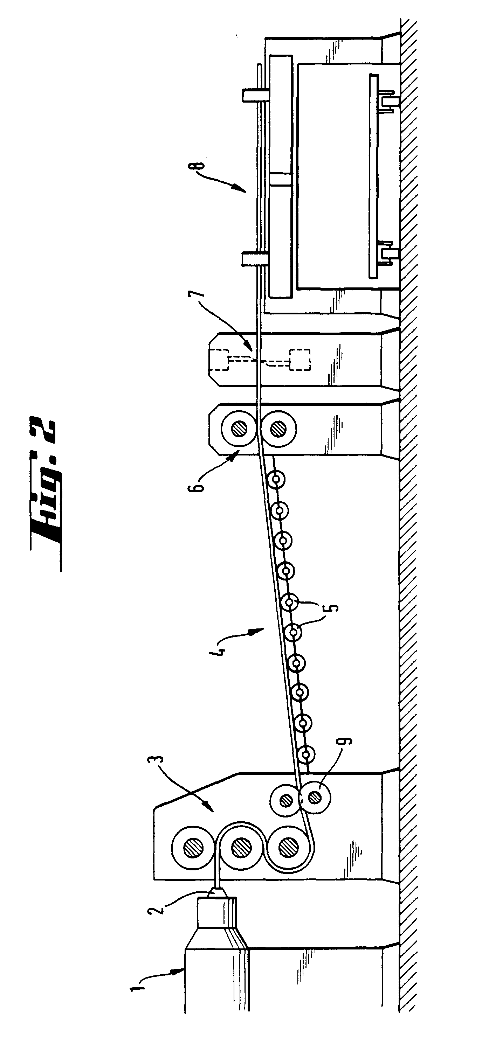

Eine derartige Extrusionsstraße ist in Fig. 2 schematisch dargestellt. Sie umfaßt im wesentlichen

- einen Extruder (1) als Plastifizierungsanlage,
- eine Breitschlitzdüse (2) als Werkzeug zum Ausformen,
- ein Glättwerk/Kalander (3)als Kalibrierwerkzeug,
- ein Kühlbett (4) und/oder eine Rollenbahn (5) zur Nachkühlung,
- einen Walzenabzug (6),
- eine Trennsäge (7),
- eine Seitenschneideinrichtung (9), und gegebenenfalls
- eine Stapelvorrichtung (8).

Das Verfahren ist dadurch gekennzeichnet, daß man den kristallisierbaren Thermoplast gegebenenfalls trocknet, dann im Extruder zusammen mit dem Farbmittel und gegebenenfalls dem UV-Stabilisator aufschmilzt, die Schmelze durch eine Düse ausformt und anschließend im Glättwerk kalibriert, glättet und kühlt, bevor man die Platte auf Maß bringt.

Das Verfahren zur Herstellung der erfindungsgemäßen Platte wird im folgenden am Beispiel von Polyethylenterephthalat ausführlich beschrieben.

Die Trocknung des Polyethylenterephthalates vor der Extrusion erfolgt vorzugsweise für 4 bis 6 Stunden bei 160 bis 180 °C.

Das Polyethylenterephthalat wird im Extruder aufgeschmolzen. Vorzugsweise liegt die Temperatur der PET-Schmelze im Bereich von 250 bis 320 °C, wobei die Temperatur der Schmelze im wesentlichen sowohl durch die Temperatur des Extruders, als auch die Verweilzeit der Schmelze im Extruder eingestellt werden kann.

Die Farbmittel (anorganische und/oder organische Pigmente sowie gegebenenfalls lösliche Farbstoffe) und gegebenenfalls das Lichtschutzmittel können in der gewünschten Konzentration bereits beim Rohstoffhersteller zudosiert werden oder bei der Plattenherstellung in den Extruder dosiert werden.

Besonders bevorzugt ist aber die Zugabe der/des Farbadditive(s) über die Masterbatchtechnologie oder über die Fest-Pigment-Präparation. Dabei werden das organische und/oder anorganische Pigment sowie gegebenenfalls der lösliche Farbstoff und/oder das Lichtschutzmittel in einem festen Trägermaterial voll dispergiert. Als Träger kommen gewisse Harze, das einzufärbende Polymere selbst oder auch andere Polymere, die mit dem kristallisierbaren Thermoplasten ausreichend verträglich sind, in Frage.

Wichtig ist, daß die Korngröße und das Schüttgewicht des Fest-Pigment-Präparates oder des Masterbatches ähnlich der Korngröße und dem Schüttgewicht des kristallisierbaren Thermoplasten sind, so daß eine homogene Verteilung und damit Einfärbung erfolgen kann.

Die Schmelze verläßt den Extruder dann durch eine Düse. Diese Düse ist vorzugsweise eine Breitschlitzdüse.

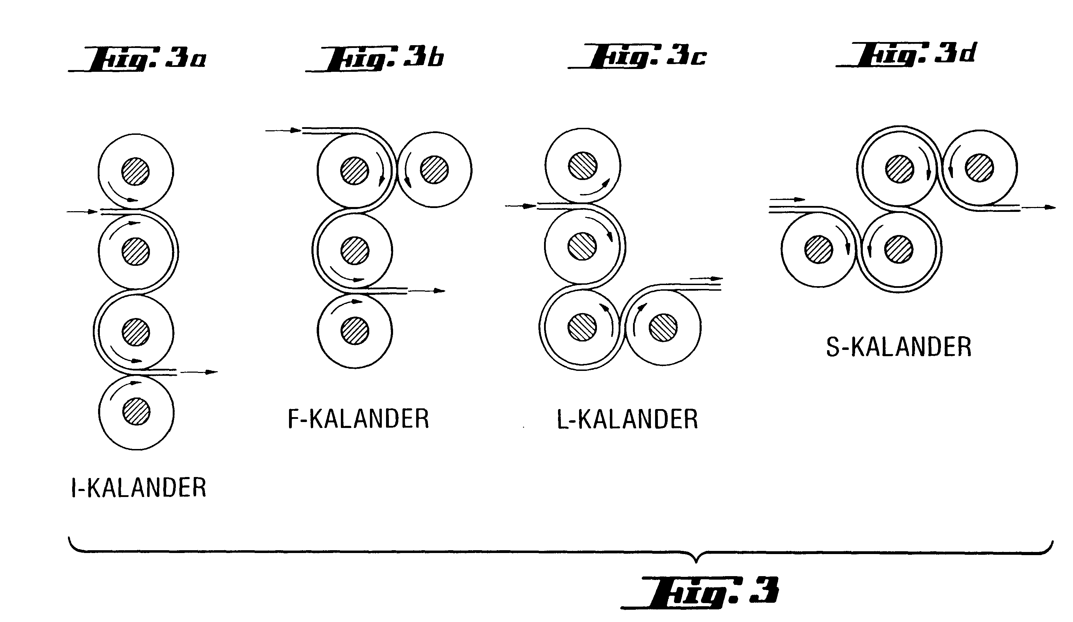

Das vom Extruder aufgeschmolzene und von einer Breitschlitzdüse ausgeformte PET wird von Glättkalanderwalzen kalibriert, d. h. intensiv gekühlt und geglättet. Die Kalanderwalzen können beispielsweise in einer I-, F-, L- oder S-Form angeordnet sein (Fig. 3).

Das PET-Material kann dann anschließend auf einer Rollenbahn nachgekühlt, seitlich auf Maß geschnitten, abgelängt und schließlich gestapelt werden.

Die Dicke der PET-Platte wird im wesentlichen vom Abzug, der am Ende der Kühlzone angeordnet ist, den mit ihm geschwindigkeitsmäßig gekoppelten Kühl-(Glätt-)Walzen und der Fördergeschwindigkeit des Extruders einerseits und dem Abstand der Walzen andererseits bestimmt.

Als Extruder können sowohl Einschnecken- als auch Zweischneckenextruder eingesetzt werden.

Die Breitschlitzdüse besteht vorzugsweise aus dem zerlegbaren Werkzeugkörper, den Lippen und dem Staubalken zur Fließregulierung über die Breite. Dazu kann der Staubalken durch Zug- und Druckschrauben verbogen werden. Die Dickeneinstellung erfolgt durch Verstellen der Lippen. Wichtig ist es auf eine gleichmäßige Temperatur des PET und der Lippe zu achten, da sonst die PET-Schmelze durch die unterschiedlichen Fließwege verschieden dick ausfließt.

Das Kalibrierwerkzeug, d. h. der Glättkalander gibt der PET-Schmelze die Form und die Abmessungen. Dies geschieht durch Einfrieren unterhalb der Glasübergangstemperatur mittels Abkühlung und Glätten. Verformt werden darf in diesem Zustand nicht mehr, da sonst in diesem abgekühlten Zustand Oberflächenfehler entstehen würden. Aus diesem Grund werden die Kalanderwalzen vorzugsweise gemeinsam angetrieben. Die Temperatur der Kalanderwalzen muß zwecks Vermeidung des Anklebens der PET-Schmelze kleiner als die Kristallitschmelztemperatur sein. Die PET-Schmelze verläßt mit einer Temperatur von 240 bis 300 °C die Breitschlitzdüse. Die erste Glätt-KühlWalze hat je nach Ausstoß und Plattendicke eine Temperatur zwischen 50 °C und 80 °C. Die zweite etwas kühlere Walze kühlt die zweite oder andere Oberfläche ab.

Liegt die Temperatur der ersten Glätt-Kühlwalze außerhalb des angegebenen Bereichs von 50 °C bis 80°C, ist es schwierig, eine amorphe Platte mit einer Dicke von 1 mm oder mehr in der erwünschten Qualität zu erhalten.

Während die Kalibriereinrichtung die PET-Oberflächen möglichst glatt zum Einfrieren bringt und das Profil so weit abkühlt, daß es formsteif ist, senkt die Nachkühleinrichtung die Temperatur der PET-Platte auf nahezu Raumtemperatur ab. Die Nachkühlung kann auf einem Rollenbett erfolgen.

Die Geschwindigkeit des Abzugs sollte mit der Geschwindigkeit der Kalanderwalzen genau abgestimmt sein, um Defekte und Dickenschwankungen zu vermeiden.

Als Zusatzeinrichtungen kann sich in der Extrusionsstraße zur Herstellung von Platten eine Trennsäge als Ablängeinrichtung, die Seitenbeschneidung, die Stapelanlage und eine Kontrollstelle befinden. Die Seiten- oder Randbeschneidung ist vorteilhaft, da die Dicke im Randbereich unter Umständen ungleichmäßig sein kann. An der Kontrollstelle werden Dicke und Optik der Platte gemessen.

Durch die überraschende Vielzahl ausgezeichneter Eigenschaften eignet sich die erfindungsgemäße, eingefärbte und amorphe Platte hervorragend für eine Vielzahl verschiedener Verwendungen, beispielsweise für Innenraumverkleidung, für Messebau und Messeartikel, für Schilder, im Laden- und Regalbau, als Werbeartikel, als Menükartenständer und als Basketball-Zielbretter.

In der UV-stabilisierten Ausführungsform eignet sich die erfindungsgemäße Platte auch für Außenanwendungen, wie z.B. Überdachungen, Außenverkleidungen, Abdeckungen, für Anwendungen im Bausektor und Balkonverkleidungen.

Die Erfindung wird im folgenden anhand von Ausführungsbeispielen näher erläutert, ohne dadurch beschränkt zu werden.

Die Messung der einzelnen Eigenschaften erfolgt dabei gemäß der folgenden Normen bzw. Verfahren.

Meßmethoden

Oberflächenglanz:

Der Oberflächenglanz wird nach DIN 67 530 bestimmt. Gemessen wird der Reflektorwert als optische Kenngröße für die Oberfläche einer Platte. Angelehnt an die Normen ASTM-D 523-78 und ISO 2813 wurde der Einstrahlwinkel mit 20° eingestellt. Ein Lichtstrahl trifft unter dem eingestellten Einstrahlwinkel auf die ebene Prüffläche und wird von dieser reflektiert beziehungsweise gestreut. Die auf den photoelektronischen Empfänger auffallenden Lichtstrahlen werden als proportionale elektrische Größe angezeigt. Der Meßwert ist dimensionslos und muß mit dem Einstrahlwinkel zusammen angegeben werden.

Weißgrad

Die Bestimmung des Weißgrades erfolgt mit Hilfe des elektrischen Remissionsphotometers "ELREPHO" der Firma Zeiss, Oberkochem (DE), Normlichtart C, 2° Normalbeobachter. Der Weißgrad wird definiert als

$$WG = RY + 3RZ - 3RX.$$

WG = Weißgrad, RY, RZ, RX = entsprechende Reflexionsfaktoren bei Einsatz des Y-, Z- und X-Farbmeßfilters. Als Weißstandard wird ein Preßling aus Bariumsulfat (DIN 5033, Teil 9) verwendet.

Oberflächendefekte:

Die Oberflächendefekte werden visuell bestimmt.

Schlagzähigkeit $a_n$ nach Charpy:

Diese Größe wird nach ISO 179/1 D ermittelt.

Schlagzähigkeit $a_k$ nach Izod:

Die Kerbschlagzähigkeit bzw. -festigkeit $a_k$ nach Izod wird nach ISO 180/1A gemessen.

Dichte:

Die Dichte wird nach DIN 53479 bestimmt.

SV (DCE), IV (DCE):

Die Standardviskosität SV (DCE) wird angelehnt an DIN 53728 in Dichloressigsäure gemessen.

Die intrinsische Viskosität berechnet sich wie folgt aus der Standardviskosität

$$IV \text{ (DCE)} = 6,67 \cdot 10^{-4} \text{ SV (DCE)} + 0,118$$

Thermische Eigenschaften:

Die thermischen Eigenschaften wie Kristallschmelzpunkt $T_m$, Kristallisationstemperaturbereich $T_c$, Nach-(Kalt-)Kristallisationstemperatur $T_{CN}$ und Glasübergangstemperatur $T_g$ werden mittels Differential Scanning Calorimetrie (DSC) bei einer Aufheizgeschwindigkeit von 10°C/min gemessen.

Molekulargewicht, Polydispersität:

Die Molekulargewichte $M_w$ und $M_n$ und die resultierende Polydispersität $M_w/M_n$ werden mittels Gelpermeationschromatographie gemessen.

Bewitterung (beidseitig), UV-Stabilität:

Die UV-Stabilität wird nach der Testspezifikation ISO 4892 wie folgt geprüft

| | |
|---|---|
| Testgerät | Atlas Ci 65 Weather Ometer |
| Testbedingungen | ISO 4892, d.h. künstliche Bewitterung |
| Bestrahlungszeit | 1000 Stunden (pro Seite) |
| Bestrahlung | 0,5 W/m$^2$, 340 nm |
| Temperatur | 63°C |
| Relative Luftfeuchte | 50 % |
| Xenonlampe | innerer und äußerer Filter aus Borosilikat |
| Bestrahlungszyklen | 102 Minuten UV-Licht, dann 18 Minuten UV-Licht mit Wasserbesprühung der Proben, dann wieder 102 Minuten UV-Licht usw. |

In den nachfolgenden Beispielen und Vergleichsbeispielen handelt es sich jeweils um einschichtige, gedeckt eingefärbte Platten unterschiedlicher Dicke, die auf der beschriebenen Extrusionsstraße hergestellt werden.

Alle UV-stabilisierten Platten wurden nach der Testspezifikation ISO 4892, beidseitig je 1000 Stunden pro Seite mit dem Atlas Ci 65 Ometer der Fa. Atlas bewittert und anschließend bezüglich der mechanischen Eigenschaften, der Verfärbung, der Oberflächendefekte, der Trübung und des Glanzes geprüft.

Beispiel 1:

Es wird eine 3 mm dicke, weiß eingefärbte, amorphe Platte hergestellt, die als Hauptbestandteil ein Polyethylenterephthalat-Polymer und 6 Gew.-% Titandioxid enthält.

Das Titandioxid ist vom Rutiltyp und ist mit einer anorganischen Beschichtung aus $Al_2O_3$ und mit einer organischen Beschichtung aus Polydimethylsiloxan gecoatet. Das Titandioxid hat einen mittleren Teilchendurchmesser von 0,2 μm.

Das Polyethylenterephthalat, aus dem die eingefärbte Platte hergestellt wird, hat eine Standardviskosität SV (DCE) von 1010, was einer intrinsischen Viskosität IV (DCE) von 0,79 dl/g entspricht. Der Feuchtigkeitsgehalt liegt bei < 0,2 % und die Dichte (DIN 53479) bei 1,41 g/cm$^3$. Die Kristallinität beträgt 59 %, wobei der Kristallitschmelzpunkt nach DSC-Messungen bei 258°C liegt. Der Kristallisationstemperaturbereich $T_c$ liegt zwischen 83°C und 258°C, wobei die Nachkristallisationstemperatur (auch Kaltkristallisationstemperatur) $T_{CN}$ bei 144°C liegt. Die Polydispersität $M_w/M_n$ des Polyethylenterephthalat-Polymeren beträgt 2,14. Die Glasübergangstemperatur liegt bei 83°C.

Das Titandioxid wird in Form eines Masterbatches zugegeben. Das Masterbatch setzt sich aus 30 Gew.-% des beschriebenen Titandioxides als Wirkstoffkomponente und 70 Gew.-% des beschriebenen Polyethylenterepthalat-Polymeren als Trägermaterial zusammen.

Vor der Extrusion werden 80 Gew.-% des Polyethylenterephthalat-Polymeren und 20 Gew.-% des Titandioxid-Masterbatches 5 Stunden bei 170°C in einem Trockner getrocknet und dann in einem Einschneckenextruder bei einer Extrusionstemperatur von 286°C durch eine Breitschlitzdüse auf einen Glättkalander, dessen Walzen S-förmig angeordnet sind, extrudiert und zu einer 3 mm dicken Platte geglättet. Die erste Kalanderwalze hat eine Temperatur von 73°C und die nachfolgenden Walzen haben jeweils eine Temperatur von 67°C. Die Geschwindigkeit des Abzuges und der Kalanderwalzen liegt bei 6,5 m/min.

Nach der Nachkühlung wird die weiße, 3 mm dicke PET-Platte mit Trennsägen an den Rändern gesäumt, abgelängt und gestapelt.

Die hergestellte, weiß eingefärbte Platte zeigt folgende Eigenschaften:

- Dicke : 3 mm
- Oberflächenglanz 1. Seite :        128 (Meßwinkel 20°) 2. Seite :        127
- Lichtransmission :        0 %
- Weißgrad :        110
- Einfärbung :        weiß, homogen
- Oberflächendefekte :        keine

(Stippen, Blasen, Orangenhaut)

- Schlagzähigkeit $a_n$ nach Charpy :        kein Bruch
- Kerbschlagzähigkeit $a_k$ nach Izod :        4,8 kJ/m$^2$
- Kaltformbarkeit :        gut
- Kristallinität :        0 %

Beispiel 2

Analog Beispiel 1 wird eine eingefärbte Platte hergestellt, wobei ein Polyethylenterephthalat eingesetzt wird, das folgende Eigenschaften aufweist:

| | |
|---|---|
| SV (DCE) | 1100 |
| IV (DCE) | 0,85 dl/g |
| Dichte | 1,38 g/cm$^3$ |
| Kristallinität | 44 % |
| Kristallitschmelzpunkt $T_m$ | 245°C |
| Kristallisationstemperaturbereich $T_c$ | 82°C bis 245°C |
| Nach-(Kalt-) Kristallisationstemperatur $T_{CN}$ | 152°C |
| Polydispersität $M_w/M_n$ | 2,02 |
| Glasübergangstemperatur | 82°C |

Das Titandioxid-Masterbatch setzt sich aus 30 Gew.-% des unter Beispiel 1 beschriebenen Titandioxids und aus 70 Gew.-% des Polyethylenterephthalats dieses Beispiels zusammen.

Die Extrusionstemperatur liegt bei 280°C. Die erste Kalendarwalze hat eine Temperatur von 66°C und die nachfolgenden Walzen haben eine Temperatur von 60°C. Die Geschwindigkeit des Abzuges und der Kalanderwalzen liegt bei 2,9 m/min.

Die hergestellte, gedeckt weiß eingefärbte PET-Platte hat folgende Eigenschaften:

- Dicke :        6 mm
- Oberflächenglanz 1. Seite :        121
        (Meßwinkel 20°) 2. Seite :        118
- Lichtransmission :        0 %
- Weißgrad :        123
- Einfärbung :        weiß, homogen
- Oberflächendefekte :        keine (Stippen, Blasen, Orangenhaut)
- Schlagzähigkeit $a_n$ nach Charpy :        kein Bruch
- Kerbschlagzähigkeit $a_k$ nach Izod :        5,1 kJ/m$^2$
- Kaltformbarkeit :        gut

- Kristallinität : 0 %

Beispiel 3:

Analog Beispiel 2 wird eine eingefärbte Platte hergestellt. Die Extrusionstemperatur liegt bei 275°C. Die erste Kalanderwalze hat eine Temperatur von 57°C und die nachfolgenden Walzen haben eine Temperatur von 50°C. Die Geschwindigkeit des Abzuges und der Kalanderwalzen liegt bei 1,7 m/min.
Die hergestellte PET-Platte hat folgendes Eigenschaftsprofil:

- Dicke : 10 mm
- Oberflächenglanz 1. Seite : 116
    (Meßwinkel 20°) 2. Seite : 114
- Lichttransmission : 0 %
- Weißgrad : 132
- Einfärbung : weiß, homogen
- Oberflächendefekte : keine (Stippen, Blasen, Orangenhaut)
- Schlagzähigkeit $a_n$ nach Charpy : kein Bruch
- Kerbschlagzähigkeit $a_k$ nach Izod : 5,3 kJ/m$^2$
- Kaltformbarkeit : gut
- Kristallinität : 0 %

Beispiel 4

Analog Beispiel 3 wird eine eingefärbte Platte hergestellt, wobei ein Polyethylenterephthalat eingesetzt wird, das folgende Eigenschaften aufweist:

| | |
|---|---|
| SV (DCE) | 1200 |
| IV (DCE) | 0,91 dl/g |
| Dichte | 1,37 g/cm$^3$ |
| Kristallinität | 36 % |
| Kristallitschmelzpunkt $T_m$ | 242°C |
| Kristallisationstemperaturbereich $T_c$ | 82°C bis 242°C |
| Nach-(Kalt-) Kristallisationstemperatur $T_{CN}$ | 157°C |
| Polydispersität $M_w/M_n$ | 2,2 |
| Glasübergangstemperatur | 82°C |

Das Titandioxid-Masterbatch setzt sich aus 30 Gew.-% des unter Beispiel 1 beschriebenen Titandioxids und aus 70 Gew.-% des Polyethylenterephthalat-Polymeren dieses Beispiels zusammen.
Die Extrusionstemperatur liegt bei 274°C. Die erste Kalanderwalze hat eine Temperatur von 50°C und die nachfolgenden Walzen haben eine Temperatur von 45°C. Die Geschwindigkeit des Abzuges und der Kalanderwalzen liegt bei 1,2 m/min.
Die hergestellte, weiß eingefärbte PET-Platte zeigt folgendes Eigenschaftsprofil:

- Dicke : 15 mm
- Oberflächenglanz 1. Seite : 112
    (Meßwinkel 20°) 2. Seite : 111
- Lichttransmission : 0 %
- Weißgrad : 138
- Einfärbung : weiß, homogen
- Oberflächendefekte : keine (Stippen, Blasen, Orangenhaut)
- Schlagzähigkeit $a_n$ nach Charpy : kein Bruch
- Kerbschlagzähigkeit $a_k$ nach Izod : 5,4 kJ/m$^2$
- Kaltformbarkeit : gut
- Kristallinität : 0,4 %

Beispiel 5

Analog Beispiel 2 wird eine eingefärbte Platte hergestellt. 50 Gew.-% des Polyethylenterephthalat-Polymeren aus Beispiel 2 werden mit 30 Gew.-% Recyklat aus diesem Polyethylenterephthalat-Polymeren und 20 Gew.-% des Titandioxid-Masterbatches abgemischt.

Die hergestellte eingefärbte PET-Platte hat folgendes Eigenschaftsprofil:

- Dicke : 6 mm
- Oberflächenglanz 1. Seite : 119
    (Meßwinkel 20°) 2. Seite : 118
- Lichttransmission : 0 %
- Weißgrad : 125
- Einfärbung : weiß, homogen
- Oberflächendefekte : keine (Stippen, Blasen, Orangenhaut)
- Schlagzähigkeit $a_n$ nach Charpy : kein Bruch
- Kerbschlagzähigkeit $a_k$ nach Izod : 5,0 kJ/m$^2$
- Kaltformbarkeit : gut
- Kristallinität : 0 %

Beispiel 6

Analog Beispiel 1 wird eine eingefärbte Platte hergestellt. Die Platte ist nicht weiß, sondern grün eingefärbt. Die 3 mm dicke, grün eingefärbte Platte enthält als Hauptbestandteil das Polyethylenterephthalat-Polymere aus Beispiel 1 und 7 Gew.-% Pigmentgrün 17.
Pigmentgrün 17 ist ein Chromoxid ($Cr_2O_3$) der Fa. BASF (® Sicopalgrün 9996).

Das Chromoxid wird wie das Titandioxid in Form eines Masterbatches zugegeben. Das Masterbatch setzt sich aus 35 Gew.-% Chromoxid (® Sicopalgrün 9996) und 65 Gew.-% des Polyethylenterephthalat-Polymeren aus Beispiel 1 zusammen.

Vor der Extrusion werden 80 Gew.-% des Polyethylenterephthalat-Polymeren aus Beispiel 1 mit 20 Gew.-% des Chromoxid-Masterbatches gemischt und 5 Stunden bei 170°C getrocknet.
Dann wird wie in Beispiel 1 beschrieben eine 3 mm dicke, grün eingefärbte Platte hergestellt, die folgende Eigenschaften aufweist:

- Dicke : 3 mm
- Oberflächenglanz 1. Seite : 130
    (Meßwinkel 20°) 2. Seite : 129
- Lichttransmission : 0,5 %
- Einfärbung : grün, homogen
- Oberflächendefekte : keine (Stippen, Blasen, Orangenhaut)
- Schlagzähigkeit $a_n$ nach Charpy : kein Bruch
- Kerbschlagzähigkeit $a_k$ nach Izod : 4,6 kJ/m$^2$
- Kaltformbarkeit : gut
- Kristallinität : 0 %

Beispiel 7

Analog Beispiel 2 wird eine eingefärbte Platte hergestellt. Die Platte enthält 3 Gew.-% Titandioxid und 3,5 Gew.-% Chromoxid.

Das Titandioxid-Masterbatch setzt sich aus 30 Gew.-% des unter Beispiel 1 beschriebenen Titandioxids und aus 70 Gew.-% des Polyethylenterephthalat-Polymeren aus Beispiel 2 zusammen.

Das Chromoxid-Masterbatch setzt sich aus 35 Gew.-% des unter Beispiel 6 beschriebenen Chromoxids (Sicopalgrün 9996) und aus 65 Gew.-% des Polyethylenterephthalat-Polymeren aus Beispiel 2 zusammen.

Vor der Extrusion werden 80 Gew.-% des Polyethylenterephthalat-Polymeren aus Beispiel 2 mit 10 Gew.-% des Titandioxid-Masterbatches und 10 % des Chromoxid-Masterbatches gemischt und 5 Stunden bei 170°C getrocknet. Dann wird wie in Beispiel 2 beschrieben eine 6 mm dicke Platte hergestellt, die folgendes Eigenschaftsprofil aufweist:

- Dicke : 6 mm

- Oberflächenglanz 1. Seite : 125
  (Meßwinkel 20°) 2. Seite : 125
- Lichttransmission : 0 %
- Einfärbung : gedecktes Hellgrün, homogen
- Oberflächendefekte : keine (Stippen, Blasen, Orangenhaut)
- Schlagzähigkeit $a_n$ nach Charpy : kein Bruch
- Kerbschlagzähigkeit $a_k$ nach Izod : 5,3 kJ/m$^2$
- Kaltformbarkeit : gut
- Kristallinität : 0 %

Vergleichsbeispiel 1

Analog Beispiel 1 wird eine eingefärbte Platte hergestellt. Das eingesetzte Polyethylentherephthalat hat eine Standardviskosität SV (DCE) von 760, was einer intrinsischen Viskosität IV (DCE) von 0,62 dl/g entspricht. Die übrigen Eigenschaften sind im Rahmen der Meßgenauigkeit mit den Eigenschaften des Polyethylenterephthalats aus Beispiel 1 identisch. Das Titandioxid-Masterbatch, die Verfahrensparameter und die Temperatur werden wie in Beispiel 1 gewählt. Infolge der niedrigen Viskosität ist keine Plattenherstellung möglich. Die Schmelzstabilität ist ungenügend, so daß die Schmelze vor dem Abkühlen auf den Kalanderwalzen zusammenfällt.

Vergleichsbeispiel 2:

Analog Beispiel 2 wird eine eingefärbte Platte hergestellt, wobei auch das Polyethylenterephthalat aus Beispiel 2 und das Titandioxid-Masterbatch aus Beispiel 2 eingesetzt werden. Die erste Kalanderwalze hat eine Temperatur von 83°C und die nachfolgenden Walzen haben jeweils eine Temperatur von 77°C.

Der Glanz ist deutlich reduziert. Die Platte zeigt Oberflächendefekte und Strukturen. Die Optik ist für eine eingefärbte Anwendung unakzeptabel. Die hergestellte Platte hat folgendes Eigenschaftsprofil:

- Dicke : 6 mm
- Oberflächenglanz 1. Seite : 85 (Trüb- und Klarflecken) (Meßwinkel 20°) 2. Seite : 82 (Trüb und Klarflecken)
- Lichttransmission : 0 %
- Einfärbung : scheint inhomogen, da die
- Oberfläche starke Strukturen, Blasen und Risse zeigt
- Oberflächendefekte : scheint inhomogen, da die Oberfläche starke Strukturen, Blasen und Risse zeigt (Stippen, Blasen, Orangenhaut)
- Schlagzähigkeit $a_n$ nach Charpy : kein Bruch
- Kerbschlagzähigkeit $a_k$ nach Izod : 5,1 kJ/m$^2$
- Kaltformbarkeit : gut
- Kristallinität : ca. 9 %

Beispiel 8:

Analog Beispiel 1 wird eine 3 mm dicke, UV-stabilisierte, weiß eingefärbte, amorphe Platte hergestellt, die als Hauptbestandteil das Polyethylenterephthalat gemäß Beispiel 1 und 6 Gew.-% Titandioxid sowie 1,0 Gew.-% des UV-Stabilisators 2-(4,6-Diphenyl-1,3,5-triazin-2-yl)-5-(hexyl)oxyphenol ( ®Tinuvin 1577 der Fa. Ciba-Geigy) enthält.
Tinuvin 1577 hat einen Schmelzpunkt von 149°C und ist bis ca. 330°C thermisch stabil.
1 Gew.-% des UV-Stabilisators Tinuvin werden direkt beim Rohstoffhersteller in das Polyethylenterephthalat eingearbeitet.
Vor der Extrusion werden 80 Gew.-% des mit 1,0 Gew.-% Tinuvin 1577 ausgerüsteten Polyethylenterephthalats und 20 Gew.-% des Titandioxid-Masterbatches 5 Stunden bei 170°C in einem Trockner getrocknet.
Die hergestellte, weiß eingefärbte Platte zeigt dieselben Eigenschaften wie die Platte nach Beispiel 1.
Nach je 1000 Stunden Bewitterung pro Seite mit Atlas Ci 65 Weather Ometer zeigt die PET-Platte folgende Eigenschaften:

- Dicke : 3 mm
- Oberflächenglanz 1. Seite : 125
  (Meßwinkel 20°) 2. Seite : 123
- Lichttransmission : 0%

- Weißgrad : 108 %
- Einfärbung : weiß, homogen
- Oberflächendefekte : keine (Risse, Versprödung)
- Schlagzähigkeit $a_n$ nach Charpy : kein Bruch
- Kerbschlagzähigkeit $a_k$ nach Izod : 4,6 kJ/m$^2$
- Kaltformbarkeit : gut
- Kristallinität : 0 %

Beispiel 9

Analog Beispiel 8 wird eine mit 1 % Tinuvin 1577 UV-stabilisierte, eingefärbte Platte hergestellt, wobei das Polyethylenterephthalat gemäß Beispiel 2 eingesetzt wird.

Das Titandioxid-Masterbatch setzt sich aus 30 Gew.-% des unter Beispiel 1 beschriebenen Titandioxids und aus 70 Gew.-% des Polyethylenterephthalats dieses Beispiels zusammen.

Die Extrusionstemperatur liegt bei 280°C. Die erste Kalandarwalze hat eine Temperatur von 66°C und die nachfolgenden Walzen haben eine Temperatur von 60°C. Die Geschwindigkeit des Abzuges und der Kalanderwalzen liegt bei 2,9 m/min.

Das hier verwendete Verfahren entspricht dem nach Beispiel 2.

Die hergestellte, gedeckt weiß eingefärbte PET-Platte hat dieselben Eigenschaften wie die Platte nach Beispiel 2.

Nach je 1000 Stunden Bewitterung pro Seite mit Atlas Ci 65 Weather Ometer zeigt die PET-Platte folgende Eigenschaften:

- Dicke : 6 mm
- Oberflächenglanz 1. Seite : 118
- (Meßwinkel 20°) 2. Seite : 117
- Lichttransmission : 0%
- Weißgrad : 121 %
- Einfärbung : weiß, homogen
- Oberflächendefekte : keine (Risse, Versprödung)
- Schlagzähigkeit $a_n$ nach Charpy : kein Bruch
- Kerbschlagzähigkeit $a_k$ nach Izod : 5,0 kJ/m$^2$
- Kaltformbarkeit : gut
- Kristallinität : 0 %

Beispiel 10

Analog Beispiel 9 wird eine mit 1,0 Gew.-% Tinuvin 1577 UV-stabilisierte, eingefärbte Platte hergestellt. Die Extrusionstemperatur liegt bei 275°C. Die erste Kalanderwalze hat eine Temperatur von 57°C und die nachfolgenden Walzen haben eine Temperatur von 50°C. Die Geschwindigkeit des Abzuges und der Kalanderwalzen liegt bei 1,7 m/min.

Das hier eingesetzte Verfahren entspricht dem Verfahren nach Beispiel 3. Die hergestellte PET-Platte hat dasselbe Eigenschaftsprofil wie die Platte nach Beispiel 3.

Nach je 1000 Stunden Bewitterung pro Seite mit Atlas Ci 65 Weather Ometer zeigt die PET-Platte folgende Eigenschaften:

- Dicke : 10 mm
- Oberflächenglanz 1. Seite : 115
- (Meßwinkel 20°) 2. Seite : 112
- Lichttransmission : 0%
- Weißgrad : 128 %
- Einfärbung : weiß, homogen
- Oberflächendefekte : keine (Risse, Versprödung)
- Schlagzähigkeit $a_n$ nach Charpy : kein Bruch
- Kerbschlagzähigkeit $a_k$ nach Izod : 5,2 kJ/m$^2$
- Kaltformbarkeit : gut
- Kristallinität : 0 %

Beispiel 11

Analog Beispiel 10 wird eine mit 1 Gew.-% Tinuvin 1577 UV-stabilisierte eingefärbte Platte hergestellt, wobei das in Beispiel 4 beschriebene Polyethylenterephthalat eingesetzt wird.

Das Titandioxid-Masterbatch setzt sich aus 30 Gew.-% des unter Beispiel 1 beschriebenen Titandioxids und aus 70 Gew.-% des Polyethylenterephthalats dieses Beispiels zusammen.

Die Extrusionstemperatur liegt bei 274°C. Die erste Kalanderwalze hat eine Temperatur von 50°C und die nachfolgenden Walzen haben eine Temperatur von 45°C. Die Geschwindigkeit des Abzuges und der Kalanderwalzen liegt bei 1,2 m/min.

Das hier eingesetzte Verfahren entspricht dem Verfahren nach Beispiel 4. Die hergestellte, weiß eingefärbte PET-Platte zeigt dasselbe Eigenschaftsprofil wie die Platte nach Beispiel 4.

Nach je 1000 Stunden Bewitterung pro Seite mit Atlas Ci 65 Weather Ometer zeigt die PET-Platte folgende Eigenschaften:

- Dicke : 15 mm
- Oberflächenglanz 1. Seite : 110
  (Meßwinkel 20°) 2. Seite : 109
- Lichttransmission : 0%
- Weißgrad : 134 %
- Einfärbung : weiß, homogen
- Oberflächendefekte : keine (Risse, Versprödung)
- Schlagzähigkeit $a_n$ nach Charpy : kein Bruch
- Kerbschlagzähigkeit $a_k$ nach Izod : 5,2 kJ/m$^2$
- Kaltformbarkeit : gut
- Kristallinität : 0,4 %

Beispiel 12

Analog Beispiel 9 wird eine mit 1,0 Gew.-% ®Tinuvin 1577 UV-stabilisierte, eingefärbte Platte hergestellt. 50 Gew.-% des Polyethylenterephthalats aus Beispiel 2 werden mit 30 Gew.-% Recyklat aus diesem Polyethylenterephthalat und 20 Gew.-% des Titandioxid-Masterbatches abgemischt.

Das hier eingesetzte Verfahren entspricht dem Verfahren nach Beispiel 5. Die hergestellte eingefärbte PET-Platte hat dasselbe Eigenschaftsprofil wie die Platte nach Beispiel 5.

Nach je 1000 Stunden Bewitterung pro Seite mit Atlas Ci 65 Weather Ometer zeigt die PET-Platte folgende Eigenschaften:

- Dicke : 6 mm
- Oberflächenglanz 1. Seite : 116
  (Meßwinkel 20°) 2. Seite : 116
- Lichttransmission : 0%
- Weißgrad : 122 %
- Einfärbung : weiß, homogen
- Oberflächendefekte : keine (Risse, Versprödung)
- Schlagzähigkeit $a_n$ nach Charpy : kein Bruch
- Kerbschlagzähigkeit $a_k$ nach Izod : 4,7 kJ/m$^2$
- Kaltformbarkeit : gut
- Kristallinität : 0 %

Beispiel 13

Analog Beispiel 9 wird eine weiß eingefärbte Platte hergestellt. Als UV-Stabilisator werden 0,8 Gew.-% des UV-Stabilisators 2,2'-Methylen-bis-(6-(2H-benzotriazol-2-yl)-4-(1,1,3,3-tetramethyl-butyl)-phenol (®Tinuvin 360 der Fa. Ciba-Geigy), bezogen auf das Gewicht des Polymeren, eingesetzt.

Tinuvin 360 hat einen Schmelzpunkt von 195°C und ist bis ca. 350°C thermisch stabil.

Wie in Beispiel 8 werden 0,8 Gew.-% des UV-Stabilisators Tinuvin 360 direkt beim Rohstoffhersteller in das Polyethylenterephthalat eingearbeitet.

Die hergestellte, UV-stabilisierte Platte weist folgende Eigenschaften auf:

- Dicke :        6 mm
- Oberflächenglanz 1. Seite :        123
          (Meßwinkel 20°) 2. Seite 122
- Lichttransmission :        0 %
- Weißgrad :        128
- Einfärbung :        weiß, homogen
- Oberflächendefekte :        keine (Stippen, Blasen, Orangenhaut)
- Schlagzähigkeit $a_n$ nach Charpy :        kein Bruch
- Kerbschlagzähigkeit $a_k$ nach Izod :        5,2 kJ/m$^2$
- Kaltformbarkeit :        gut
- Kristallinität :        0 %

Nach je 1000 Stunden Bewitterung pro Seite mit dem Atlas Ci 65 Weather Ometer zeigt die PET-Platte folgende Eigenschaften:

- Dicke :        6 mm
- Oberflächenglanz 1. Seite :        118
          (Meßwinkel 20°) 2. Seite :        117
- Lichttransmission :        0%
- Weißgrad :        123 %
- Einfärbung :        weiß, homogen
- Oberflächendefekte :        keine (Risse, Versprödung)
- Schlagzähigkeit $a_n$ nach Charpy :        kein Bruch
- Kerbschlagzähigkeit $a_k$ nach Izod :        5,0 kJ/m$^2$
- Kaltformbarkeit :        gut
- Kristallinität :        0 %

Vergleichsbeispiel 3

Analog Beispiel 8 wird eine weiß eingefärbte, UV-stabilisierte Platte hergestellt. Das eingesetzte Polyethylenterephthalat hat eine Standardviskosität SV (DCE) von 760, was einer intrinsischen Viskosität IV (DCE) von 0,62 dl/g entspricht. Die übrigen Eigenschaften sind im Rahmen der Meßgenauigkeit mit den Eigenschaften des Polyethylenterephthalats aus Beispiel 1 identisch. Das Titandioxid-Masterbatch, die Verfahrensparameter und die Temperatur werden wie in Beispiel 1 gewählt. Infolge der niedrigen Viskosität ist keine Plattenherstellung möglich. Die Schmelzstabilität ist ungenügend, so daß die Schmelze vor dem Abkühlen auf den Kalanderwalzen zusammenfällt.

Vergleichsbeispiel 4

Die nach Beispiel 1 erhaltene Platte, die der Platte nach Beispiel 8 entspricht, jedoch keinen UV-Stabilisator enthält, wird der Bewitterung ausgesetzt.
Nach je 1000 Stunden Bewitterung pro Seite mit Atlas Ci 65 Weather Ometer zeigt die PET-Platte folgende Eigenschaften:

- Dicke :        3 mm
- Oberflächenglanz 1. Seite :        88
          (Meßwinkel 20°) 2. Seite :        86
- Lichttransmission :        0%
- Weißgrad :        81 %
- Einfärbung :        weiß-gelblich
- Oberflächendefekte (Risse, Versprödung):        Oberfläche ist stumpf und zeigt eine starke Vergilbung
- Schlagzähigkeit $a_n$ nach Charpy :        vollkommener Bruch bei 44,2 kJ/m$^2$
- Kerbschlagzähigkeit $a_k$ nach Izod :        1,6 kJ/m$^2$
- Kaltformbarkeit :        Rißbildung
- Kristallinität :        0 %

Visuell betrachtet zeigt die Platte eine starke Vergilbung.

Beispiel 14

Es wird eine 3 mm dicke, weiß eingefärbte, amorphe Platte hergestellt, die als Hauptbestandteil Polyethylenterephthalat und 6 Gew.-% Titandioxid enthält.

Das Titandioxid ist vom Rutiltyp und ist mit einer anorganischen Beschichtung aus $Al_2O_3$ und mit einer organischen Beschichtung aus Polydimethylsiloxan gecoatet. Das Titandioxid hat einen mittleren Teilchendurchmesser von 0,2 μm.

Das Polyethylenterephthalat, aus dem die eingefärbte Platte hergestellt wird, hat eine Standardviskosität SV (DCE) von 3490, was einer intrinsischen Viskosität IV (DCE) von 2,45 dl/g entspricht. Der Feuchtigkeitsgehalt liegt bei < 0,2 % und die Dichte (DIN 53479) bei 1,35 g/cm$^3$. Die Kristallinität beträgt 19 %, wobei der Kristallitschmelzpunkt nach DSC-Messungen bei 243°C liegt. Der Kristallisationstemperaturbereich $T_c$ liegt zwischen 82°C und 243°C. Die Polydispersität $M_w/M_n$ des Polyethylenterephthalats beträgt 4,3, wobei $M_w$ bei 225 070 g/mol und $M_n$ bei 52 400 g/mol liegt. Die Glasübergangstemperatur liegt bei 83°C.

Das Titandioxid wird in Form eines Masterbatches zugegeben. Das Masterbatch setzt sich aus 30 Gew.-% des beschriebenen Titandioxides als Wirkstoffkomponente und 70 Gew.-% des beschriebenen Polyethylenterephthalats als Trägermaterial zusammen.

Vor der Extrusion werden 80 Gew.-% des Polyethylenterephthalats und 20 Gew.-% des Titandioxid-Masterbatches 5 Stunden bei 170°C in einem Trockner getrocknet und dann in einem Einschneckenextruder bei einer Extrusionstemperatur von 286°C durch eine Breitschlitzdüse auf einen Glättkalander, dessen Walzen S-förmig angeordnet sind, extrudiert und zu einer 3 mm dicken Platte geglättet. Die erste Kalanderwalze hat eine Temperatur von 73°C und die nachfolgenden Walzen haben jeweils eine Temperatur von 67°C. Die Geschwindigkeit des Abzuges und der Kalanderwalzen liegt bei 6,5 m/min.

Nach der Nachkühlung wird die weiße, 3 mm dicke PET-Platte mit Trennsägen an den Rändern gesäumt, abgelängt und gestapelt. Die hergestellte, weiß eingefärbte Platte zeigt folgende Eigenschaften:

- Dicke : 3 mm
- Oberflächenglanz 1. Seite : 131
  (Meßwinkel 20°) 2. Seite : 129
- Lichttransmission : 0 %
- Weißgrad : 112
- Einfärbung : weiß, homogen
- Oberflächendefekte : keine (Stippen, Blasen, Orangenhaut usw.)
- Schlagzähigkeit $a_n$ nach Charpy : kein Bruch
- Kerbschlagzähigkeit $a_k$ nach Izod : 4,8 kJ/m$^2$
- Kaltformbarkeit : gut
- Kristallinität : 0 %

Beispiel 15

Analog Beispiel 14 wird eine eingefärbte Platte hergestellt, wobei ein Polyethylenterephthalat eingesetzt wird, das folgende Eigenschaften aufweist:

| | |
|---|---|
| SV (DCE) | 2717 |
| IV (DCE) | 1,9 dl/g |
| Dichte | 1,38 g/cm$^3$ |
| Kristallinität | 44 % |
| Kristallitschmelzpunkt $T_m$ | 245°C |
| Kristallisationstemperaturbereich $T_c$ | 82°C bis 245°C |
| $M_w$ | 175 640 g/mol |
| $M_n$ | 49 580 g/mol |
| Polydispersität $M_w/M_n$ | 2,02 |
| Glasübergangstemperatur | 82°C |

Das Titandioxid-Masterbatch setzt sich aus 30 Gew.-% des unter Beispiel 15 beschriebenen Titandioxids und aus 70 Gew.-% des Polyethylenterephthalats dieses Beispiels zusammen.

Die Extrusionstemperatur liegt bei 280°C. Die erste Kalanderwalze hat eine Temperatur von 66°C und die nachfolgenden Walzen haben eine Temperatur von 60°C. Die Geschwindigkeit des Abzuges und der Kalanderwalzen liegt bei 2,9 m/min.

Die hergestellte, gedeckt weiß eingefärbte PET-Platte hat folgende Eigenschaften:

- Dicke : 6 mm
- Oberflächenglanz 1. Seite : 124
  (Meßwinkel 20°) 2. Seite : 121
- Lichttransmission : 0 %
- Weißgrad : 125
- Einfärbung : weiß, homogen
- Oberflächendefekte : keine (Stippen, Blasen, Orangenhaut usw.)
- Schlagzähigkeit $a_n$ nach Charpy : kein Bruch
- Kerbschlagzähigkeit $a_k$ nach Izod : 5,1 kJ/m$^2$
- Kaltformbarkeit : gut
- Kristallinität : 0 %

Beispiel 16

Analog Beispiel 15 wird eine eingefärbte Platte hergestellt. Die Extrusionstemperatur liegt bei 275°C. Die erste Kalanderwalze hat eine Temperatur von 57°C und die nachfolgenden Walzen haben eine Temperatur von 50°C. Die Geschwindigkeit des Abzuges und der Kalanderwaizen liegt bei 1,7 m/min.

Die hergestellte PET-Platte hat folgendes Eigenschaftsprofil:

- Dicke : 10 mm
- Oberflächenglanz 1. Seite : 118
  (Meßwinkel 20°) 2. Seite : 115
- Lichttransmission : 0 %
- Weißgrad : 134
- Einfärbung : weiß, homogen
- Oberflächendefekte : keine (Stippen, Blasen, Orangenhaut usw.)
- Schlagzähigkeit $a_n$ nach Charpy : kein Bruch
- Kerbschlagzähigkeit $a_k$ nach Izod : 5,3 kJ/m$^2$
- Kaltformbarkeit : gut
- Kristallinität : 0 %

Beispiel 17

Analog Beispiel 16 wird eine eingefärbte Platte hergestellt, wobei ein Polyethylenterephthalat eingesetzt wird, das folgende Eigenschaften aufweist:

| | |
|---|---|
| SV (DCE) | 3173 |
| IV (DCE) | 2,23 dl/g |
| Dichte | 1,34 g/cm$^3$ |
| Kristallinität | 12 % |
| Kristallitschmelzpunkt $T_m$ | 240°C |
| Kristallisationstemperaturbereich $T_c$ | 82°C bis 240°C |
| $M_w$ | 204 660 g/mol |
| $M_n$ | 55 952 g/mol |
| Polydispersität $M_w/M_n$ | 3,66 |
| Glasübergangstemperatur | 82°C |

Das Titandioxid-Masterbatch setzt sich aus 30 Gew.-% des unter Beispiel 14 beschriebenen Titandioxids und aus 70 Gew.-% des Polyethylenterephthalats dieses Beispiels zusammen.

Die Extrusionstemperatur liegt bei 274°C. Die erste Kalanderwalze hat eine Temperatur von 50°C und die nachfolgenden Walzen haben eine Temperatur von 45°C. Die Geschwindigkeit des Abzuges und der Kalanderwalzen liegt bei 1,2 m/min.

Die hergestellte, weiß eingefärbte PET-Platte zeigt folgendes Eigenschaftsprofil:

- Dicke : 15 mm
- Oberflächenglanz 1. Seite : 115
  (Meßwinkel 20°) 2. Seite : 112
- Lichttransmission : 0 %
- Weißgrad : 141
- Einfärbung : weiß, homogen
- Oberflächendefekte : keine (Stippen, Blasen, Orangenhaut usw.)
- Schlagzähigkeit $a_n$ nach Charpy : kein Bruch
- Kerbschlagzähigkeit $a_k$ nach Izod : 5,4 kJ/m$^2$
- Kaltformbarkeit : gut
- Kristallinität : 0 %

Beispiel 18

Analog Beispiel 15 wird eine eingefärbte Platte hergestellt. 50 Gew.-% des Polyethylenterephthalats aus Beispiel 15 werden mit 30 Gew.-% Recyklat aus diesem Polyethylenterephthalat und 20 Gew.-% des Titandioxid-Masterbatches abgemischt.

Die hergestellte eingefärbte PET-Platte hat folgendes Eigenschaftsprofil:

- Dicke : 6 mm
- Oberflächenglanz 1. Seite : 121
  (Meßwinkel 20°) 2. Seite : 120
- Lichttransmission : 0 %
- Weißgrad : 127
- Einfärbung : weiß, homogen
- Oberflächendefekte : keine (Stippen, Blasen, Orangenhaut usw.)
- Schlagzähigkeit $a_n$ nach Charpy : kein Bruch
- Kerbschlagzähigkeit $a_k$ nach Izod : 5,0 kJ/m$^2$
- Kaltformbarkeit : gut
- Kristallinität : 0 %

Beispiel 19

Analog Beispiel 14 wird eine eingefärbte Platte hergestellt. Die Platte ist nicht weiß, sondern grün eingefärbt. Die 3 mm dicke, grün eingefärbte Platte enthält als Hauptbestandteil das Polyethylenterephthalat aus Beispiel 14 und 7 Gew.-% Pigmentgrün 17.
Pigmentgrün 17 ist ein Chromoxid ($Cr_2O_3$) der Fa. BASF (® Sicopalgrün 9996).

Das Chromoxid wird wie das Titandioxid in Form eines Masterbatches zugegeben. Das Masterbatch setzt sich aus 35 Gew.-% Chromoxid (® Sicopalgrün 9996) und 65 Gew.-% des Polyethylenterephthalats aus Beispiel 14 zusammen.

Vor der Extrusion werden 80 Gew.-% des Polyethylenterephthalats aus Beispiel 14 mit 20 Gew.-% des Chromoxid-Masterbatches gemischt und 5 Stunden bei 170°C getrocknet.

Dann wird wie in Beispiel 14 beschrieben eine 3 mm dicke, grün eingefärbte Platte hergestellt, die folgende Eigenschaften aufweist:

- Dicke : 3 mm
- Oberflächenglanz 1. Seite : 128
  (Meßwinkel 20°) 2. Seite : 126
- Lichttransmission : 0,2 %
- Einfärbung : grün, homogen
- Oberflächendefekte : keine (Stippen, Blasen, Orangenhaut usw.)
- Schlagzähigkeit $a_n$ nach Charpy : kein Bruch
- Kerbschlagzähigkeit $a_k$ nach Izod : 4,6 kJ/m$^2$
- Kaltformbarkeit : gut
- Kristallinität : 0 %

Beispiel 20

Analog Beispiel 15 wird eine eingefärbte Platte hergestellt. Die Platte enthält 3 Gew.-% Titandioxid und 3,5 Gew.-% Chromoxid.

Das Titandioxid-Masterbatch setzt sich aus 30 Gew.-% des unter Beispiel 14 beschriebenen Titandioxids und aus 70 Gew.-% des Polyethylenterephthalats aus Beispiel 15 zusammen.

Das Chromoxid-Masterbatch setzt sich aus 35 Gew.-% des unter Beispiel 19 beschriebenen Chromoxids (Sicopalgrün 9996) und aus 65 Gew.-% des Polyethylenterephthalats aus Beispiel 15 zusammen.

Vor der Extrusion werden 80 Gew.-% des Polyethylenterephthalats aus Beispiel 15 mit 10 Gew.-% des Titandioxid-Masterbatches und 10 % des Chromoxid-Masterbatches gemischt und 5 Stunden bei 170°C getrocknet. Dann wird wie in Beispiel 15 beschrieben eine 6 mm dicke Platte hergestellt, die folgendes Eigenschaftsprofil aufweist:

- Dicke :        6 mm
- Oberflächenglanz 1. Seite :        126
        (Meßwinkel 20°) 2. Seite :        124
- Lichttransmission :        0 %
- Einfärbung :        gedecktes Hellgrün, homogen
- Oberflächendefekte :        keine (Stippen, Blasen, Orangenhaut usw.)
- Schlagzähigkeit $a_n$ nach Charpy :        kein Bruch
- Kerbschlagzähigkeit $a_k$ nach Izod :        5,3 kJ/m$^2$
- Kaltformbarkeit :        gut
- Kristallinität :        0 %

Beispiel 21

Analog Beispiel 14 wird eine 3 mm dicke, eingefärbte, amorphe Platte hergestellt, die als Hauptbestandteil das Polyethylenterephthalat und das Titandioxid aus Beispiel 14 und 1,0 Gew.-% des UV-Stabilisators 2-(4,6-Diphenyl-1,3,5-triazin-2-yl)-5-(hexyl)oxyphenol ( ®Tinuvin 1577 der Firma Ciba Geigy) enthält. Tinuvin 1577 hat einen Schmelzpunkt von 149°C und ist bis ca. 330°C thermisch stabil.

1,0 Gew.-% des UV-Stabilisators werden direkt beim Rohstoffhersteller in das Polyethylenterephthalat eingearbeitet.

Die Trocknungs-, Extrusions- und Verfahrensparameter werden wie in Beispiel 14 gewählt.

Die hergestellte, weiß eingefärbte Platte zeigt folgende Eigenschaften:

- Dicke :        3 mm
- Oberflächenglanz 1. Seite :        130
        (Meßwinkel 20°) 2. Seite :        129
- Lichttransmission :        0 %
- Weißgrad :        114
- Einfärbung :        weiß, homogen
- Oberflächendefekte :        keine (Stippen, Blasen, Orangenhaut usw.)
- Schlagzähigkeit $a_n$ nach Charpy :        kein Bruch
- Kerbschlagzähigkeit $a_k$ nach Izod :        4,8 kJ/m$^2$
- Kaltformbarkeit :        gut
- Kristallinität :        0 %

Nach je 1000 Stunden Bewitterung pro Seite mit dem Atlas Ci 65 Weather Ometer zeigt die PET-Platte folgende Eigenschaften:

- Dicke :        3 mm
- Oberflächenglanz 1. Seite :        126
        (Meßwinkel 20°) 2. Seite :        125
- Lichttransmission :        0 %
- Weißgrad :        110
- Einfärbung :        weiß, homogen
- Oberflächendefekte :        keine (Risse, Versprödung)
- Schlagzähigkeit $a_n$ nach Charpy :        kein Bruch
- Kerbschlagzähigkeit $a_k$ nach Izod :        4,6 kJ/m$^2$

- Kaltformbarkeit : gut
- Kristallinität : 0 %

Beispiel 22

Analog Beispiel 21 wird eine 3 mm dicke, eingefärbte, amorphe Platte hergestellt. Der UV-Stabilisator 2-(4,6-Diphenyl-1,3,5-triazin-2-yl)-5-(hexyl)-oxyphenol (®Tinuvin 1577) wird in Form eines Masterbatches zudosiert. Das Masterbatch setzt sich aus 5 Gew.-% ®Tinuvin 1577 als Wirkstoffkomponente und 95 Gew.-% des Polyethylenterephthalats aus Beispiel 14 zusammen.

Vor der Extrusion werden 60 Gew.-% des Polyethylenterephthalats und 20 Gew.-% des Titandioxid-Masterbatches aus Beispiel 14 mit 20 Gew.-% des Masterbatches 5 Stunden bei 170°C getrocknet. Die Extrusion und Plattenherstellung erfolgt analog zu Beispiel 14.

Die hergestellte, weiß eingefärbte Platte zeigt folgende Eigenschaften:

- Dicke : 3 mm
- Oberflächenglanz 1. Seite : 129
  (Meßwinkel 20°) 2. Seite : 128
- Lichttransmission : 0 %
- Weißgrad : 112
- Einfärbung : weiß, homogen
- Oberflächendefekte : keine (Stippen, Blasen, Orangenhaut usw.)
- Schlagzähigkeit $a_n$ nach Charpy : kein Bruch
- Kerbschlagzähigkeit $a_k$ nach Izod : 4,6 kJ/m$^2$
- Kaltformbarkeit : gut
- Kristallinität : 0 %

Nach je 1000 Stunden Bewitterung pro Seite mit dem Atlas Ci 65 Weather Ometer zeigt die PET-Platte folgende Eigenschaften:

- Dicke : 3 mm
- Oberflächenglanz 1. Seite : 126
  (Meßwinkel 20°) 2. Seite : 124
- Lichttransmission : 0 %
- Weißgrad : 109
- Einfärbung : weiß, homogen
- Oberflächendefekte : keine (Risse, Versprödung)
- Schlagzähigkeit $a_n$ nach Charpy : kein Bruch
- Kerbschlagzähigkeit $a_k$ nach Izod : 4,3 kJ/m$^2$
- Kaltformbarkeit : gut
- Kristallinität : 0 %

**Patentansprüche**

1. Eingefärbte, amorphe Platte, mit einer Dicke im Bereich von 1 bis 20 mm,
   **dadurch gekennzeichnet, daß** sie als Hauptbestandteil einen kristallisierbaren Thermoplasten und mindestens ein Farbmittel ausgewählt unter einem organischen und anorganischen Pigment enthält, wobei die Konzentration des Pigments im Bereich von 0,5 bis 30 Gew.-%, bezogen auf das Gewicht des kristallisierbaren Thermoplasten, liegt.

2. Platte gemäß Anspruch 1, **dadurch gekennzeichnet, daß** die Platte zusätzlich einen löslichen Farbstoff enthält.

3. Platte gemäß Anspruch 2, **dadurch gekennzeichnet, daß** die Konzentration des löslichen Farbstoffes im Bereich von 0,001 bis 20 Gew.-%, bezogen auf das Gewicht des kristallisierbaren Thermoplasten, liegt.

4. Platte gemäß Anspruch 2 oder 3, **dadurch gekennzeichnet, daß** der lösliche Farbstoff ein fett- und aromatenlöslicher Azo- oder Anthrachinonfarbstoff ist.

5. Platte gemäß einem der vorhergehenden Ansprüche, **dadurch gekennzeichnet, daß** der Oberflächenglanz, gemessen nach DIN 67530 (Meßwinkel 20°) größer als 90 ist.

6. Platte gemäß mindestens einem der vorhergehenden Ansprüche, **dadurch gekennzeichnet, daß** die Lichttransmission, gemessen nach ASTM D 1003, kleiner als 5 % ist.

7. Platte nach einem der vorhergehenden Ansprüche, **dadurch gekennzeichnet, daß** der eingesetzte kristallisierbare Thermoplast eine Standardviskosität SV (DCE), gemessen in Dichloressigsäure nach DIN 53728, aufweist, die im Bereich von 800 bis 6000 liegt.

8. Platte nach Anspruch 7, **dadurch gekennzeichnet, daß** der eingesetzte kristallisierbare Thermoplast eine Standardviskosität SV (DCE), gemessen in Dichloressigsäure nach DIN 53728, aufweist, die im Bereich von 950 bis 5000 liegt.

9. Platte nach einem der vorhergehenden Ansprüche, **dadurch gekennzeichnet, daß** die Platte einen Kristallinitätsgrad von weniger als 5 % hat.

10. Platte gemäß einem der vorhergehenden Ansprüche, **dadurch gekennzeichnet, daß** der kristallisierbare Thermoplast ausgewählt ist unter Polyethylenterephthalat (PET), Polybutylenterephthalat (PBT), einem Cycloolefinpolymer und einem Cycloolefincopolymer.

11. Platte gemäß Anspruch 10, **dadurch gekennzeichnet, daß** als kristallisierbarer Thermoplast Polyethylenterephthalat verwendet wird.

12. Platte gemäß Anspruch 10, **dadurch gekennzeichnet, daß** das Polyethylenterephthalat Polyethylenterephthalat-Recyklat enthält.

13. Platte gemäß Anspruch 11 oder 12, **dadurch gekennzeichnet, daß** bei der Messung der Schlagzähigkeit $a_n$ nach Charpy, gemessen nach ISO 179/1D, kein Bruch auftritt.

14. Platte gemäß einem der Ansprüche 11 bis 13, **dadurch gekennzeichnet, daß** die Kerbschlagfestigkeit $a_k$ nach Izod, gemessen nach ISO 180/1A, im Bereich von 2,0 bis 8,0 kJ/m$^2$ liegt.

15. Platte gemäß einem der Ansprüche 11 bis 14, **dadurch gekennzeichnet, daß** das Polyethylenterephthalat einen Kristallitschmelzpunkt, gemessen durch DSC mit einer Aufheizgeschwindigkeit von 10°C/min., im Bereich von 220° bis 280°C aufweist.

16. Platte gemäß einem der Ansprüche 11 bis 15, **dadurch gekennzeichnet, daß** das Polyethylenterephthalat eine Kristallisationstemperatur, gemessen durch DSC mit einer Aufheizgeschwindigkeit von 10°/min., im Bereich von 75° bis 280°C aufweist.

17. Platte gemäß einem der Ansprüche 11 bis 16, **dadurch gekennzeichnet, daß** das eingesetzte Polyethylenterephthalat eine Kristallinität aufweist, die im Bereich von 5 bis 65 % liegt.

18. Platte nach einem der vorhergehenden Ansprüche, **dadurch gekennzeichnet, daß** die Platte zusätzlich einen UV-Stabilisator enthält.

19. Platte nach Anspruch 18, **dadurch gekennzeichnet, daß** die Konzentration des UV-Stabilisators im Bereich von 0,01 bis 5 Gew.-%, bezogen auf das Gewicht des kristallisierbaren Thermoplasten, liegt.

20. Platte nach Anspruch 18 oder 19, **dadurch gekennzeichnet, daß** mindestens ein UV-Stabilisator ausgewählt unter 2-Hydroxybenzotriazole und Triazine verwendet wird.

21. Platte nach Anspruch 20, **dadurch gekennzeichnet, daß** mindestens ein UV-Stabilisator ausgewählt unter 2-(4,6-Diphenyl-1,3,5-triazin-2-yl)-5-(hexyl)oxy-phenol und 2,2'-Methylen-bis(6-(2H-benzotriazol-2-yl)-4-(1,1,3,3-tetramethylbutyl)-phenol verwendet wird.

22. Verfahren zur Herstellung einer amorphen, eingefärbten Platte nach einem der vorhergehenden Ansprüche, das die folgenden Schritte umfaßt: Aufschmelzen des kristallisierbaren Thermoplasten zusammen mit dem Farbmittel in einem Extruder, Ausformen der Schmelze durch eine Düse, und anschließend im Glättwerk, Kalibrieren, Glätten und Kühlen mit mindestens zwei Walzen bevor die Platte auf Maß gebracht wird, wobei die erste Walze des Glättwerkes eine Temperatur im Bereich von 50°C bis 80°C aufweist.

23. Verfahren nach Anspruch 22, **dadurch gekennzeichnet, daß** der kristallisierbare Thermoplast vor dem Aufschmelzen getrocknet wird.

24. Verfahren nach Anspruch 22 oder 23, **dadurch gekennzeichnet, daß** der UV-Stabilisator zusammen mit dem Farbmittel und dem Thermoplasten im Extruder aufgeschmolzen wird.

25. Verfahren nach einem der Ansprüche 22 bis 24, **dadurch gekennzeichnet, daß** die Zugabe des Farbmittels und/oder des UV-Stabilisators über die Masterbatchtechnologie durchgeführt wird.

26. Verfahren nach einem der Ansprüche 22 bis 25, **dadurch gekennzeichnet, daß** als kristallisierbarer Thermoplast PET verwendet wird.

27. Verfahren nach Anspruch 26,**dadurch gekennzeichnet, daß** das PET vor dem Aufschmelzen für 4 bis 6 Stunden bei 160 bis 180°C getrocknet wird.

28. Verfahren nach Anspruch 26 oder 27, **dadurch gekennzeichnet, daß** die Temperatur der PET-Schmelze im Bereich von 250 bis 320°C liegt.

29. Verwendung einer gefärbten, amorphen Platte nach einem der Ansprüche 1 bis 21 für Innenanwendungen und im Messebau.

30. Verwendung der mit einem UV-Stabilisator ausgestatteten Platten nach einem der Ansprüche 18 bis 21, im Außenbereich.


**Revendications**

1. Plaque colorée, amorphe, avec une épaisseur dans la gamme comprise entre 1 et 20 mm, **caractérisée en ce qu'**elle contient comme constituant principal une matière thermoplastique cristallisable et au moins un colorant choisi entre un pigment organique et inorganique, la concentration du pigment se situant dans la gamme comprise entre 0,5 et 30% en poids par rapport au poids de la matière thermoplastique cristallisable.

2. Plaque selon la revendication 1, **caractérisée en ce que** la plaque contient de plus un colorant soluble.

3. Plaque selon la revendication 2, **caractérisée en ce que** la concentration du colorant soluble se situe dans la gamme de 0,001 à 20% en poids, par rapport au poids de la matière thermoplastique cristallisable.

4. Plaque selon la revendication 2 ou 3, **caractérisée en ce que** le colorant soluble est un colorant azoïque ou anthraquinone soluble dans les composés aromatiques.

5. Plaque selon l'une des revendications précédentes, **caractérisée en ce que** le brillant de la surface, mesuré selon DIN 67530 (angle de mesure 20°) est supérieur à 90.

6. Plaque selon l'une des revendications précédentes, **caractérisée en ce que** la transmission de la lumière, mesurée selon ASTM D 1003, est inférieure à 5%.

7. Plaque selon l'une des revendications précédentes, **caractérisée en ce que** la matière thermoplastique cristallisable mise en oeuvre présente une viscosité standard VS (DCE), mesurée dans l'acide dichloroacétique selon DIN 53728, qui se situe dans la gamme comprise entre 800 et 6000.

8. Plaque selon la revendication 7, **caractérisée en ce que** la matière thermoplastique cristallisable mise en oeuvre présente une viscosité standard VS (DCE), mesurée dans l'acide dichloroacétique selon DIN 53728, qui se situe dans la gamme comprise entre 950 et 5000.

9. Plaque selon l'une des revendications précédentes, **caractérisée en ce que** la plaque possède un indice de cristallinité de moins de 5%.

10. Plaque selon l'une des revendications précédentes, **caractérisée en ce que** la matière thermoplastique cristallisable est choisie parmi le polytéréphtalate d'éthylène (PET), le polytéréphtalate de butylène (PBT), un polymère de cyclooléfine et un copolymère de cyclooléfine.

11. Plaque selon la revendication 10, **caractérisée en ce qu'**on utilise comme matière thermoplastique cristallisable le polytéréphtalate d'éthylène.

12. Plaque selon la revendication 10, **caractérisée en ce que** le polytéréphtalate d'éthylène contient du polytéréphtalate d'éthylène de recyclage.

13. Plaque selon la revendication 11 ou 12, **caractérisée en ce qu'**il ne se produit pas de fracture lors de la mesure de la résilience $a_n$ selon Charpy, mesurée selon ISO 179/1D.

14. Plaque selon l'une des revendications 11 à 13, **caractérisée en ce que** l'indice de résilience $a_k$ selon Izod, mesuré selon ISO 180/1A, se situe de préférence dans la gamme de 2,0 à 8,0 kJ/m$^2$.

15. Plaque selon l'une des revendications 11 à 14, **caractérisée en ce que** le polytéréphtalate d'éthylène présente un point de fusion des cristallites, mesuré par DSC avec une vitesse de montée en température de 10°C/min, dans la gamme de 220° à 280°C.

16. Plaque selon l'une des revendications 11 à 15, **caractérisée en ce que** le polytéréphtalate d'éthylène présente une température de cristallisation, mesurée par DSC avec une vitesse de montée en température de 10°C/min, dans la gamme de 75° à 280°C.

17. Plaque selon l'une des revendications 11 à 16, **caractérisée en ce que** le polytéréphtalate d'éthylène mis en oeuvre présente une cristallinité qui se situe dans la gamme de 5 à 65%.

18. Plaque selon l'une des revendications précédentes, **caractérisée en ce que** la plaque contient en plus un stabilisateur anti-UV.

19. Plaque selon la revendication 18, **caractérisée en ce que** la concentration du stabilisateur anti-UV se situe dans la gamme de 0,01 à 5% en poids, par rapport au poids de la matière thermoplastique cristallisable.

20. Plaque selon la revendication 18 ou 19, **caractérisée en ce qu'**on utilise au moins un stabilisateur anti-UV choisi parmi les 2-hydroxybenzotriazols et les triazines.

21. Plaque selon la revendication 209, **caractérisée en ce qu'**on utilise au moins un stabilisateur anti-UV choisi entre le 2-(4,6-diphényl-1,3,5-triazin-2-yl)-5-(hexyl)-oxy-phénol et le 2,2'-méthylèn-bis-(6-(2H-benzotriazol-2-yl)-4-(1,1,3,3-tétraméthylbutyl)-phénol.

22. Procédé pour la fabrication d'une plaque amorphe, colorée, selon l'une des revendications précédentes, qui comprend les étapes suivantes : fusion de la matière thermoplastique cristallisable avec le colorant dans une extrudeuse, formage de la matière fondue à travers une buse, et ensuite dans un outil de glaçage, calibrage, glaçage et refroidissement avec au moins deux cylindres avant d'amener la plaque aux mesures, dans lequel le premier cylindre de l'outil de glaçage présente une température dans la gamme comprise entre 50°C et 80°C.

23. Procédé selon la revendication 22, **caractérisé en ce que** la matière thermoplastique cristallisable est séchée avant la fusion.

24. Procédé selon la revendication 22 ou 23, **caractérisé en ce que** le stabilisateur anti-UV est fondu dans l'extrudeuse en même temps que le colorant et la matière thermoplastique.

25. Procédé selon l'une des revendications 22 à 24, **caractérisé en ce qu'**on effectue l'addition du colorant et/ou du stabilisateur anti-UV par la technologie du lot maître.

**26.** Procédé selon l'une des revendications 22 à 25, **caractérisé en ce qu'**on utilise le PET comme matière thermoplastique cristallisable.

**27.** Procédé selon la revendication 26, **caractérisé en ce que** le PET est séché pendant 4 à 6 heures entre 160 et 180°C avant la fusion.

**28.** Procédé selon la revendication 26 ou 27, **caractérisé en ce que** la température du PET fondu se situe dans la gamme de 250 à 320°C.

**29.** Utilisation d'une plaque amorphe, colorée, selon l'une des revendications 1 à 21 pour les installations intérieures et dans les expositions.

**30.** Utilisation des plaques munies d'un stabilisateur anti-UV selon l'une des revendications 18 à 21, en plein air.

**Claims**

**1.** A colored, amorphous sheet having a thickness in the range from 1 to 20 mm, **characterized in that** it comprises, as the main constituent, a crystallizable thermoplastic and at least one colorant selected from an organic and inorganic pigment, the concentration of the pigment being in the range from 0.5 to 30% by weight, based on the weight of the crystallizable thermoplastic.

**2.** A sheet as claimed in claim 1, **characterized in that** the sheet additionally comprises a soluble dye.

**3.** A sheet as claimed in claim 2, **characterized in that** the concentration of the soluble dye is in the range from 0.001 to 20% by weight, based on the weight of the crystallizable thermoplastic.

**4.** A sheet as claimed in claim 2 or 3, **characterized in that** the soluble dye is a fat- and aromatics-soluble azo or anthraquinone dye.

**5.** A sheet as claimed in one of the preceding claims, **characterized in that** the surface gloss, measured in accordance with DIN 67530 (measurement angle 20°) is greater than 90.

**6.** A sheet as claimed in at least one of the preceding claims, **characterized in that** the light transmission, measured in accordance with ASTM D 1003, is less than 5%.

**7.** A sheet as claimed in one of the preceding claims, **characterized in that** the crystallizable thermoplastic employed has a standard viscosity SV (DCA), measured in dichloracetic acid in accordance with DIN 53728, which is in the range from 800 to 6000.

**8.** A sheet as claimed in claim 7, **characterized in that** the crystallizable thermoplastic employed has a standard viscosity SV (DCA), measured in dichloroacetic acid in accordance with DIN 53278, which is in the range from 950 to 5000.

**9.** A sheet as claimed in one of the preceding claims, **characterized in that** the sheet has a degree of crystallinity of less than 5%.

**10.** A sheet as claimed in one of the preceding claims, **characterized in that** the crystallizable thermoplastic is chosen from polyethylene terephthalate (PET), polybutylene terephthalate (PBT), a cycloolefin polymer and a cycloolefin copolymer.

**11.** A sheet as claimed in claim 10, **characterized in that** polyethylene terephthalate is used as the crystallizable thermoplastic.

**12.** A sheet as claimed in claim 10, **characterized in that** the polyethylene terephthalate comprises polyethylene terephthalate recycled material.

**13.** A sheet as claimed in claim 11 or 12, **characterized in that** no fracture occurs during measurement of the Charpy

impact strength $a_n$, measured in accordance with ISO 179/1D.

14. A sheet as claimed in one of claims 11 to 13, **characterized in that** the Izod notched impact strength $a_k$, measured in accordance with ISO 180/1A, is in the range from 2.0 to 8.0 kJ/m$^2$.

15. A sheet as claimed in one of claims 11 to 14, **characterized in that** the polyethylene terephthalate has a crystallite melting point, measured by DSC at a heating-up rate of 10°C/minute, in the range from 220° to 280°C.

16. A sheet as claimed in one of claims 11 to 15, **characterized in that** the polyethylene terephthalate has a crystallization temperature, measured by DSC with a heating-up rate of 10°/minute, in the range of 75° to 280°C.

17. A sheet as claimed in one of claims 11 to 16, **characterized in that** the polyethylene terephthalate employed has a crystallinity in the range from 5 to 65%.

18. A sheet as claimed in one of the preceding claims, **characterized in that** the sheet additionally comprises a UV stabilizer.

19. A sheet as claimed in claim 18, **characterized in that** the concentration of the UV stabilizer is in the range from 0.01 to 5% by weight, based on the weight of the crystallizable thermoplastic.

20. A sheet as claimed in claim 18 or 19, **characterized in that** at least one UV stabilizer chosen from 2-hydroxybenzotriazoles and triazines is used.

21. A sheet as claimed in claim 20, **characterized in that** at least one UV stabilizer chosen from 2-(4,6-diphenyl-1,3,5-triazine-2-yl)-5-(hexyl)oxy-phenol and 2,2'-methylene-bis (6-2H-benzotriazol-2-yl)-4-(1,1,3,3-tetramethyl-butyl)-phenol is used.

22. A process for the production of an amorphous, colored sheet as claimed in one of the preceding claims, which comprises the following steps: melting of the crystallizable thermoplastic together with the colorant in an extruder, shaping of the melt through a die and subsequent sizing, polishing and cooling with at least two rolls in the polishing stack, before the sheet is cut to size, the first roll of the polishing stack having a temperature in the range from 50°C to 80°C.

23. The process as claimed in claim 22, **characterized in that** the crystallizable thermoplastic is dried before being melted.

24. The process as claimed in claim 22 or 23, **characterized in that** the UV stabilizer is melted in the extruder together with the colorant and the thermoplastic.

25. The process as claimed in one of claims 22 to 24, **characterized in that** the addition of the colorant and/or of the UV stabilizer is carried out via masterbatch technology.

26. The process as claimed in one of claims 22 to 25, **characterized in that** PET is used as the crystallizable thermoplastic.

27. The process as claimed in claim 26, **characterized in that** the PET is dried at 160 to 180°C for 4 to 6 hours before being melted.

28. The process as claimed in claim 26 or 27, **characterized in that** the temperature of the PET melt is in the range from 250 to 320°C.

29. The use of a colored, amorphous sheet as claimed in one of claims 1 to 21 for interior applications and in exhibition construction.

30. The use outdoors of the sheets treated with a UV stabilizer as claimed in one of claims 18 to 21.

*Fig. 1a*

2-(4,6-Diphenyl-1,3,5-triazin-2-yl)-5-(hexyl)oxyphenol

*Fig. 1b*

2,2´-Methylen-bis(6-(2H-benzotriazol-2-yl)-4-(1,1,3,3-tetramethylbutyl)-phenol

Fig. 2

*Fig. 3a*  *Fig. 3b*  *Fig. 3c*  *Fig. 3d*

I-KALANDER

F-KALANDER

L-KALANDER

S-KALANDER

*Fig. 3*

EP 0 828 599 B1